# EUROPEAN PATENT APPLICATION

(11) **EP 2 731 325 A1**
(43) Date of publication of application: **14.05.2014**
(21) Application number: 12807368.1
(22) Date of filing: 02.07.2012
(51) Int. Cl.: H04N 5/228, H04N 5/232, H04N 5/341

(54) **IMAGING DEVICE AND RECORDING MEDIUM**

(30) Priority: 05.07.2011 JP 2011149529
(71) Applicant: NEC CASIO Mobile Communications, Ltd., Kawasaki-shi, Kanagawa 211-8666 (JP)
(72) Inventor: MASUDA Kozo, Tokyo 100-8220 (JP)
(74) Representative: Vossius & Partner
(86) International application number: PCT/JP2012/066926
(87) International publication number: WO 2013/005727

(57) **Abstract**

A mobile phone (101) includes a reader (110) for generating readout information from sensor information generated by an imaging sensor (105). The reader (110) can read out sensor information in different readout modes: a pixel addition mode; and a cutout mode. A readout mode is selected by a mode selector (111) on the basis of a zoom factor obtained on the basis of an instruction by a user. When the readout mode selected by the mode selector (111) requires a change of the readout mode, a switching image generator (125) generates switching image information, and a pre-set switching image is displayed on a display (103), until image information corresponding to the readout mode after the change is generated.

## Description

### Technical Field

The present invention relates to an imaging device and a recording medium.

### Background Art

Many digital cameras have a digital zoom function. A user of such a digital camera takes a magnified image while looking at an image on a display.

As to a processing load for executing a digital zoom function, the smaller an amount of image information to be processed is, the smaller the processing load becomes. In view of this aspect, a technique for reducing the amount of image information by adding and then reading out, from an imaging sensor, signal charges of corresponding pixels has been proposed (refer to Patent Literature 1, for example).

In the pixel addition readout method , to read out signal charges obtained by photoelectric conversion, from an imaging sensor, signal charges of pixels positioned in a predetermined region and having the same color are added and then read out. In the technique disclosed in Patent Literature 1, the number of pixels to be subjected to add is changed in stages according to a zoom factor.

### Citation List

### Patent Literature

Patent Literature 1: Unexamined Japanese Patent Application Kokai Publication No. 2008-17090.

### Summary of Invention

### Technical Problem

A process of reading out signal charges from an imaging sensor after changing the number of pixels to be subjected to add is time-consuming. During this process, displaying of a display freezes.

The present invention has been made in view of the above circumstances, and aims to provide an imaging device and a recording medium that reduce occurrence of display freeze.

### Solution to Problem

To achieve the above object, an imaging device according to a first aspect of the present invention comprises: an imaging sensor including *N* pixels (where *N* is an integer equal to or larger than three); reduction readout means for reading out a piece of sensor information indicating intensity of incident light, from every *M* pixels (where *M* is an integer equal to or larger than two and smaller than *N*) of the *N* pixels of the imaging sensor; region readout means for reading out, from each of pixels in a specific region among the *N* pixels of the imaging sensor, a piece of sensor information indicating intensity of light incident upon the pixel; mode selection means for obtaining a zoom factor on the basis of a user instruction, and selecting either a reduction mode or a region mode as a readout mode depending on the obtained zoom factor, the reduction mode being for reading out the piece of sensor information by the reduction readout means, the region mode being for reading out the piece of sensor information by the region readout means; switching discrimination means for discriminating whether or not the readout mode selected by the mode selection means requires a change of the readout mode; switching-image generation means for generating switching image information representing a pre-set switching image when the switching discrimination means discriminates that the readout mode is to be changed; and display control means for causing a reduction image to be displayed when the piece of sensor information is read out in the reduction mode, the reduction image being represented by the piece of sensor information read out by the reduction readout means, causing a region image to be displayed when the piece of sensor information is read out in the region mode, the region image being represented by the piece of the sensor information read out by the region readout means, and causing a switching image to be displayed while changing from one of the reduction image and the region image to the other, the switching image being represented by the switching image information generated by the switching-image generation means.

Moreover, an imaging device according to a second aspect of the present invention comprises: an imaging sensor including *N* pixels (where *N* is an integer equal to or larger than three); region receipt means for receiving information indicating a region specified by a user on an image displayed on display means; reduction readout means for reading out a piece of sensor information indicating intensity of incident light, from every *M* pixels (where *M* is an integer equal to or larger than two and smaller than *N*) of the *N* pixels of the imaging sensor; region readout means for reading out, from each of pixels in a specific region among the *N* pixels of the imaging sensor, a piece of sensor information indicating intensity of light incident upon the pixel; mode selection means for obtaining a zoom factor from size of an image displayed on the display means and size of the region indicated by information received by the region receipt means, and selecting either a reduction mode or a region mode as a readout mode depending on the obtained zoom factor, the reduction mode being for reading out the piece of sensor information by the reduction readout means, the region mode being for reading out the piece of sensor information by the region readout means; zoom-image generation means for generating zoom image information corresponding to the obtained zoom factor, from a corresponding one of the piece of sensor information read out by the reduction readout means and the piece of sensor information read out by the region readout means; and display control means for causing the display means to display a zoom image represented by the zoom image information.

Moreover, a computer-readable recording medium according to a third aspect of the present invention stores a program causing a computer to function as: reduction readout means for reading out a piece of sensor information indicating intensity of incident light, from every *M* pixels of the *N* pixels of an imaging sensor (where *N* is an integer equal to or larger than three) (where *M* is an integer equal to or larger than two and smaller than *N*); region readout means for reading out, from each of pixels in a specific region among the *N* pixels of the imaging sensor, a piece of sensor information indicating intensity of light incident upon the pixel; mode selection means for obtaining a zoom factor on the basis of a user instruction, and selecting either a reduction mode or a region mode as a readout mode depending on the obtained zoom factor, the reduction mode being for reading out the piece of sensor information by the reduction readout means, the region mode being for reading out the piece of sensor information by the region readout means; switching discrimination means for discriminating whether or not the readout mode selected by the mode selection means requires a change of the readout mode; switching-image generation means for generating switching image information representing a pre-set switching image when the switching discrimination means discriminates that the readout mode is to be changed; and display control means for causing a reduction image to be displayed when the piece of sensor information is read out in the reduction mode, the reduction image being represented by the piece of sensor information read out by the reduction readout means, causing a region image to be displayed when the piece of sensor information is read out in the region mode, the region image being represented by the piece of the sensor information read out by the region readout means, and causing a switching image to be displayed while changing from one of the reduction image and the region image to the other, the switching image being represented by the switching image information generated by the switching-image generation means.

Furthermore, a computer-readable recording medium according to a fourth aspect of the present invention stores a program causing a computer to function as: region receipt means for receiving information indicating a region specified by a user on an image displayed on display means; reduction readout means for reading out a piece of sensor information indicating intensity of incident light, from every *M* pixels of the *N* pixels of an imaging sensor (where *N* is an integer equal to or larger than three) (where *M* is an integer equal to or larger than two and smaller than *N*); region readout means for reading out, from each of pixels in a specific region among the *N* pixels of the imaging sensor, a piece of sensor information indicating intensity of light incident upon the pixel; mode selection means for obtaining a zoom factor from size of an image displayed on the display means and size of a region indicated by information received by the region receipt means, and selecting either a reduction mode or a region mode as a readout mode depending on the obtained zoom factor, the reduction mode being for reading out the piece of sensor information by the reduction readout means, the region mode being for reading out the piece of sensor information by the region readout means; zoom-image generation means for generating zoom image information corresponding to the obtained zoom factor, from a corresponding one of the piece of sensor information read out by the reduction readout means and the piece of sensor information read out by the region readout means; and display control means for causing the display means to display a zoom image represented by the zoom image information.

### Advantageous Effects of Invention

According to the present invention, occurrence of display freeze in an imaging device can be reduced.

### Brief Description of Drawings

FIG. 1 is an explanatory drawing showing external appearance of a mobile phone according to a first embodiment of the present invention;
FIG. 2 is an explanatory drawing showing configuration of the mobile phone according to the first embodiment;
FIG. 3 is an explanatory drawing showing a color filter provided to an imaging sensor;
FIG. 4 is an explanatory drawing showing a photographic image obtained by performing a processing process on sensor information;
FIG. 5 is an explanatory drawing showing configuration of an input receiver according to the first embodiment;
FIG. 6 is an explanatory drawing showing configuration of a reader;
FIG. 7 is an explanatory drawing showing configuration of a mode selector according to the first embodiment;
FIG. 8 is a flowchart showing a photographing process according to the first embodiment;
FIG. 9 is a flowchart showing a photographing start process;
FIG. 10 is an explanatory drawing showing a method of obtaining the pixel values of G-component pixels to be included in pixel addition information;
FIG. 11 is an explanatory drawing showing a method of obtaining the pixel values of R-component pixels to be included in the pixel addition information;
FIG. 12 is an explanatory drawing showing a method of obtaining the pixel values of B-component pixels to be included in the pixel addition information;
FIG. 13 is an explanatory drawing showing positional relationship between each representative pixel, whose pixel value is obtained by using a pixel addition algorithm, and a corresponding pixel of the imaging sensor;
FIG. 14 is an explanatory drawing showing a pixel array included in the pixel addition information;
FIG. 15 is an explanatory drawing showing a reference image generated on the basis of the pixel addition information on pixels in the pixel array shown in FIG. 14;
FIG. 16 is a flowchart showing a mode selection process according to the first embodiment;
FIG. 17 is an explanatory drawing showing a zoom image at a zoom factor of 1.5;
FIG. 18 is an explanatory drawing showing a zoom image displayed on a display when the zoom factor is 1.5;
FIG. 19 is a flowchart showing a mode switching process;
FIG. 20 is an explanatory drawing showing a switching image;
FIG. 21 is an explanatory drawing showing a pixel array included in cutout information;
FIG. 22 is an explanatory drawing showing relationship between a cutout image and a reference image;
FIG. 23 is an explanatory drawing showing the cutout image;
FIG. 24 is an explanatory drawing showing a zoom image displayed on the display when the zoom factor is two;
FIG. 25 is an explanatory drawing showing a zoom image at a zoom factor of four;
FIG. 26 is an explanatory drawing showing a zoom image displayed on the display when the zoom factor is four;
FIG. 27 is an explanatory drawing showing relationship between change in a zoom factor and time according to the first embodiment;
FIG. 28 is an explanatory drawing showing external appearance of a mobile phone according to a second embodiment;
FIG. 29 is an explanatory drawing showing configuration of the mobile phone according to the second embodiment;
FIG. 30 is an explanatory drawing showing configuration of an input receiver according to the second embodiment;
FIG. 31 is an explanatory drawing showing configuration of a mode selector according to the second embodiment;
FIG. 32 is a flowchart showing a photographing process according to the second embodiment;
FIG. 33 is a flowchart showing a mode selection process according to the second embodiment;
FIG. 34 is an explanatory drawing showing external appearance of a mobile phone according to a third embodiment;
FIG. 35 is an explanatory drawing showing configuration of the mobile phone according to the third embodiment;
FIG. 36 is an explanatory drawing showing configuration of an input receiver according to the third embodiment;
FIG. 37 is a flowchart showing a photographing process according to the third embodiment;
FIG. 38 is an explanatory drawing showing a region specifying method using a touch panel; and
FIG. 39 is an explanatory drawing showing a region specifying method using the touch panel.

### Description of Embodiments

Embodiments of the present invention will be described below with reference to the drawings. Note that the same components are denoted by the same reference numerals and characters throughout the drawings.

### (First Embodiment)

A mobile phone according to a first embodiment transmits and receives information including sound, characters, and images. Moreover, the mobile phone includes an imaging device (camera). Images taken by the imaging device may be still images or videos. In this embodiment, description will be given by taking a still image as an example.

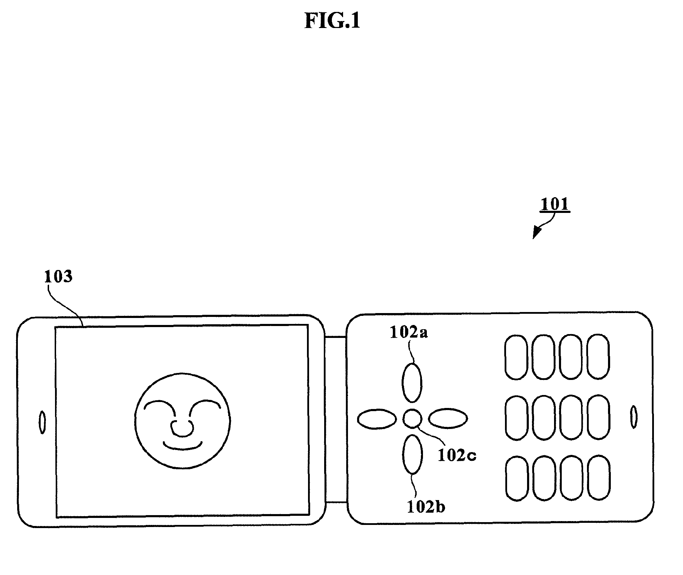

A mobile phone 101 according to the first embodiment includes inputters 102a to 102c and a display 103, as shown in FIG. 1.

The inputters 102a to 102c are parts to be operated by a user. A user instruction inputted by an operation of the inputters 102a to 102c is received by an input receiver 109 to be described later.

The display 103 displays an image. The display 103 comprises a stripe-type VGA (640×480×RGB) liquid crystal display. Each pixel of the liquid crystal display is composed of R (red), G (green), and B (blue) sub-pixels.

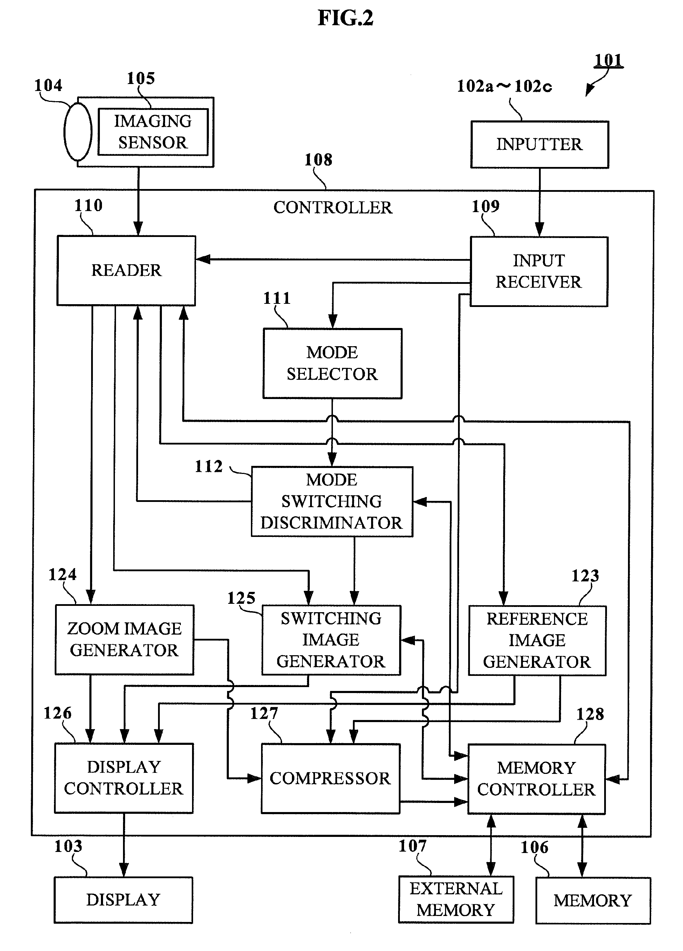

The mobile phone 101 further includes a lens 104, an imaging sensor 105, a memory 106, an attachable-detachable external memory 107, and a controller 108, as shown in FIG. 2.

The lens 104 forms an image of a subject on the imaging sensor 105. The lens 104 is provided to the back of the display 103.

The imaging sensor 105 includes *N* photoreceivers (where *N* is an integer equal to or larger than three) (8000 horizontally × 6000 vertically) on an imaging surface. Each photoreceiver generates an electric signal representing intensity of light incident from the subject, by photoelectric conversion. The imaging sensor is composed of semiconductor devices such as a CMOS (Complementary Metal Oxide Semiconductor) sensor, a CCD (Charge Coupled Device) image sensor, or the like.

The imaging sensor 105 includes an R (red), G (green), and B (blue) color-filter. Each photoreceiver of the imaging sensor 105 is provided with one of the R, G, and B color filters. The photoreceiver provided with a color filter forms a pixel of the imaging sensor 105. Accordingly, each pixel of the imaging sensor 105 has an R, G, or B color component. The imaging sensor 105 generates sensor information indicating intensity of incident light.

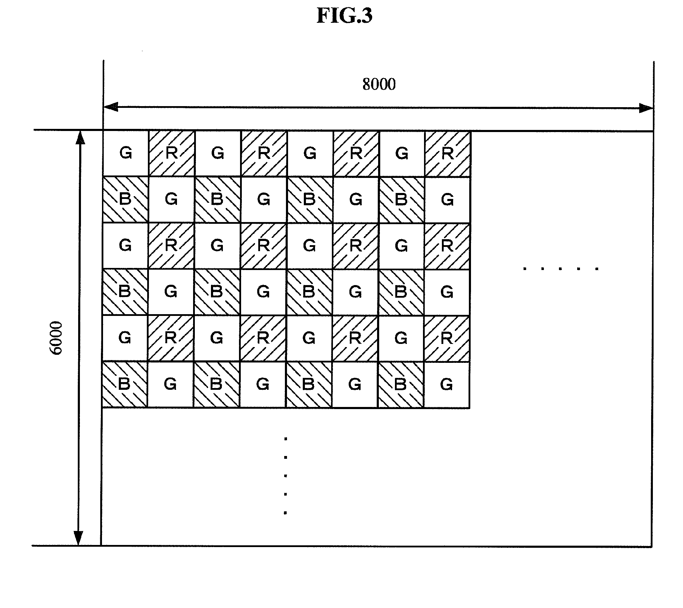

FIG. 3 shows the color-filter in this embodiment. In the color-filter, color filters, 8000 horizontally × 6000 vertically, are arranged in a Bayer array. In a color-filter having a Bayer array, G-component filters and R-component filters are arranged alternately in each odd-numbered line. In each even-numbered line, B-component filters and G-component filters are arranged alternately. In addition, G-component filters in the odd-numbered lines and even-numbered lines are arranged not to be vertically adjacent to each other.

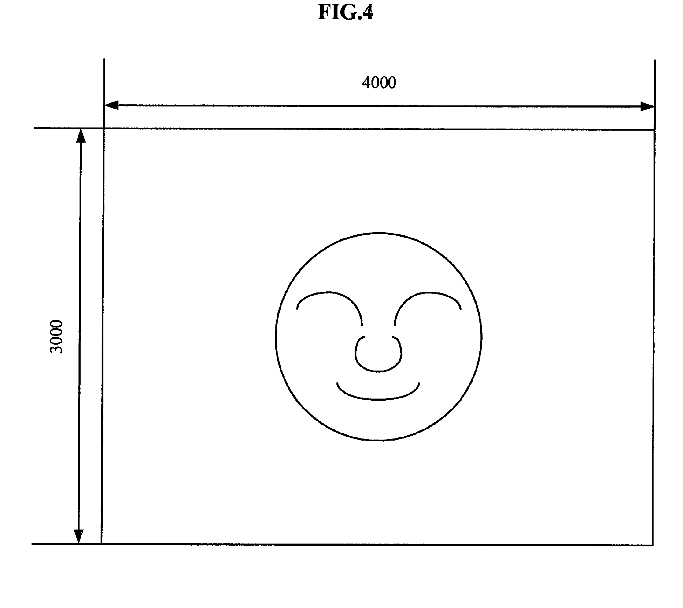

FIG. 4 shows a photographic image obtained by performing a processing process on sensor information, according to this embodiment. The photographic image is represented by 12 M (mega) pixels (4000 horizontally × 3000 vertically). Each of the pixels representing the photographic image is composed of a pixel of the imaging sensor 105, the pixel having one of the color components.

The memory 106 and the external memory 107 form a storage that stores various kinds of information. The memory 106 is a RAM (Random Access Memory) or a flash memory, for example (FIG. 2). The external memory 107 is a flash memory, for example. In the following, this embodiment will be described by considering the memory 106 as the storage.

The controller 108 controls a photographing function of the mobile phone 101. The controller 108 is composed of one or multiple processors.

FIG. 2 shows functions provided to the controller 108. Each function may be implemented by a function of a corresponding processor of the controller 108. Alternatively, each function may be implemented by executing a corresponding software program stored in the memory 106. Further, each function may be implemented by a combination of a function of a corresponding processor and execution of a corresponding software program stored in the memory 106.

As shown in FIG. 2, the controller 108 includes the input receiver 109, a reader 110, a mode selector 111, and a mode switching discriminator 112.

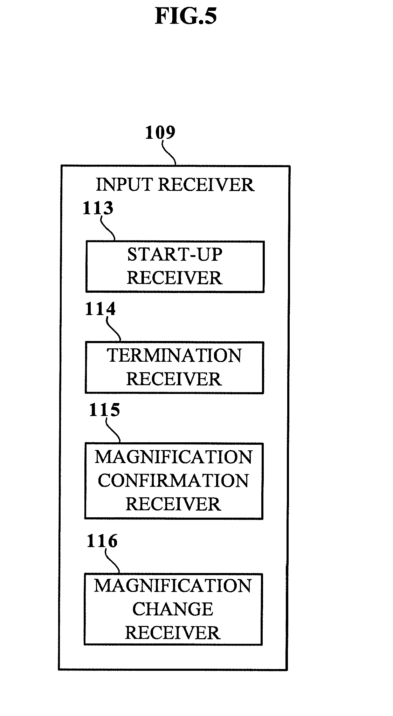

The input receiver 109 receives instruction information corresponding to an operation of the inputters 102a to 102c by the user. The input receiver 109 includes a start-up receiver 113, a termination receiver 114, a magnification confirmation receiver 115, and a magnification change receiver 116, as shown in FIG. 5.

The start-up receiver 113 receives start-up information for starting the photographing function of the controller 108. The termination receiver 114 receives termination information for terminating the photographing function of the controller 108. The magnification confirmation receiver 115 receives magnification confirmation information for recording a photographic image at a zoom factor desired by the user. The magnification change receiver 116 receives magnification change information for changing a zoom factor.

The instruction information corresponds to the inputter key buttons 102a to 102c. For example, when a user presses the UP key 102a, the magnification change receiver 116 receives magnification change information for increasing the zoom factor (zoom in). Moreover, when a user presses the DOWN key 102b, the magnification change receiver 116 receives magnification change information for reducing the zoom factor (zoom out). Further, when a user presses the confirmation key 102c, the magnification confirmation receiver 115 receives magnification confirmation information.

The reader 110 reads out sensor information from the imaging sensor 105 (FIG. 2). The reader 110 reads out the sensor information from the imaging sensor 105 in a pixel addition mode (reduction mode) or a cutout mode (region mode). The reader 110 generates readout information from the read-out sensor information (FIG. 2).

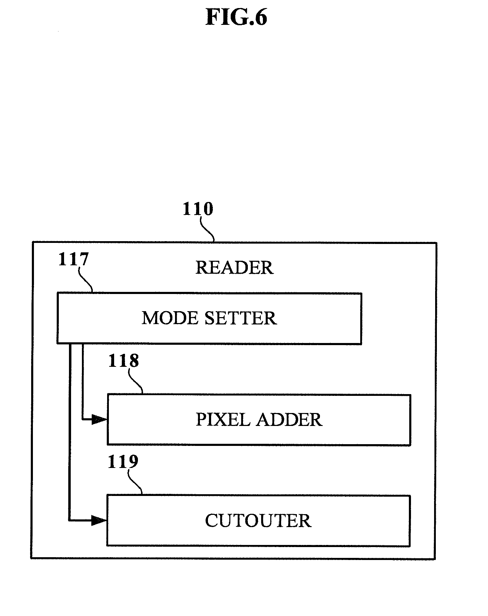

The reader 110 includes a mode setter 117, a pixel adder 118, and a cutouter 119, as shown in FIG. 6.

The mode setter 117 sets the pixel addition mode or the cutout mode as the readout mode.

The pixel adder 118 reads out sensor information from the imaging sensor 105 by using a pixel addition algorithm (pixel addition mode). From the read-out sensor information, the pixel adder 118 generates pixel addition information in which, for each representative pixel, a position of the representative pixel to be described later and a pixel value of the representative pixel (value of intensity of incident light) are associated with each other.

By using the pixel addition algorithm, the pixel adder 118 divides the pixel array of the imaging sensor 105 into unit regions each including *M* pixels. Here, *M* is an integer equal to or larger than two and smaller than the number *N* of the pixels of the imaging sensor. The pixel adder 118 adds pixel values of the pixels having the same color component in each unit region. The pixel adder 118 sets the obtained sum of the pixel values as the pixel value of the representative pixel set in the unit region. The position of the representative pixel is obtained on the basis of a position of the unit region. In addition, the color component of the representative pixel corresponds to a color component of the pixels subjected to add. The details of the pixel addition mode will be described later with a concrete example.

The cutouter 119 reads out, from each of the pixels in a specific region of the pixel array of the imaging sensor 105, sensor information indicating intensity of light incident on the pixel. From the read-out sensor information, the cutouter 119 generates cutout information in which, for each pixel, a position of the pixel and a pixel value of the pixel are associated with each other. The cutout mode will be described later with a concrete example.

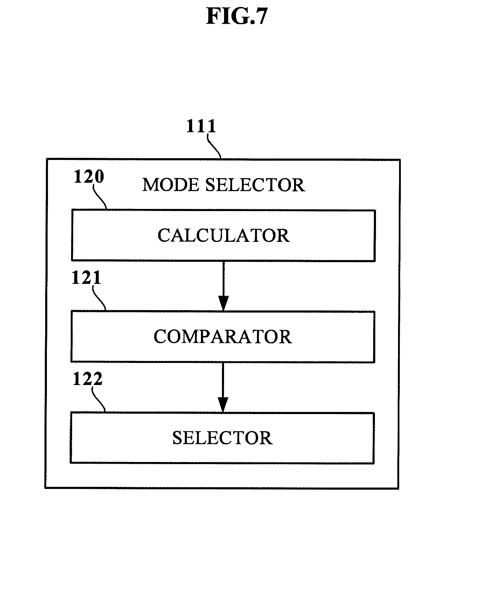

The mode selector 111 selects the pixel addition mode or the cutout mode as the readout mode, on the basis of a zoom factor and a threshold value (FIG. 2). The mode selector 111 includes a calculator 120, a comparator 121, and a selector 122, as shown in FIG. 7.

The calculator 120 calculates a post-change zoom factor, on the basis of the magnification change information. The calculator 120 generates information indicating the calculated zoom factor (zoom factor information). Moreover, the calculator 120 holds the generated zoom factor information. Alternatively, the zoom factor information may be stored in the memory 106.

For example, assume that the magnification change receiver 116 receives magnification change information indicating that the UP key 102a is pressed once. In this case, the calculator 120 increases, by one level (0.1, for example), a zoom factor at the time when the magnification change information was received (current zoom factor). When the DOWN key 102b is pressed once, the calculator 120 decreases the current zoom factor by one level.

When the UP key 102a is pressed continuously, the calculator 120 may calculate a zoom factor so that the zoom factor would increase in proportion to the time period in which the UP key 102a is pressed. Alternatively, the calculator 120 may calculate a zoom factor so that the zoom factor would increase, at an accelerated rate, with the time period in which the UP key 102a is pressed. Further, when the DOWN key 102b is pressed continuously, the calculator 120 may calculate a zoom factor so that the zoom factor would decrease with the time period in which the DOWN key 102b is pressed.

The comparator 121 discriminates whether or not the zoom factor calculated by the calculator 120 is equal to or larger than a threshold value.

The selector 122 selects the pixel addition mode as the readout mode when the zoom factor is smaller than the threshold value according to the discrimination result from the comparator 121. When the zoom factor is equal to or larger than the threshold value, the selector 122 selects the cutout mode as the readout mode. The selector 122 generates information indicating the selected readout mode.

The mode switching discriminator 112 discriminates whether or not the readout mode is to be changed, on the basis of the readout mode selected by the mode selector 111 (FIG. 2). The mode switching discriminator 112 generates information indicating the discrimination result.

Specifically, the mode switching discriminator 112 refers to the post-change readout mode information and the pre-change readout mode information. Here, the post-change readout mode information indicates the selected readout mode (post-change readout mode). In addition, the pre-change readout mode information indicates the pre-change readout mode. The pre-change readout mode information may be held by the mode switching discriminator 112 or the memory 106. When the post-change readout mode and the pre-change readout mode are the same, the mode switching discriminator 112 discriminates that the readout mode is not to be changed. When the post-change readout mode and the pre-change readout mode are different, the mode switching discriminator 112 discriminates that the readout mode is to be changed.

The controller 108 further includes a reference image generator 123, a zoom image generator 124, a switching image generator 125, a display controller 126, a compressor 127, and a memory controller 128, as shown in FIG. 2.

The reference image generator 123 generates information indicating a reference image (reference image information), from the sensor information by using initial setting.

The reference image is an image that is used as a reference when a zoom factor is obtained. In other words, the reference image is an image at the same magnification (zoom factor of one). The reference image according to this embodiment is an image showing the largest area among images possible for pixel addition information to represent. Note that any concrete conditions may be set for the reference image.

The zoom image generator 124 generates information representing a zoom image (zoom image information), from the readout information. The zoom image is, for example, an image obtained by magnifying the reference image by the zoom factor by using the center of the reference image as a fixed point.

Note that the reference image generator 123 and the zoom image generator 124 may carry out one or multiple processes among demosaicing, a noise reduction process, and gamma correction.

The switching image generator 125 generates information representing a switching image (switching image information). The switching image information is generated while a switching process is being carried out. The switching process includes operations related to the change of the readout mode after discrimination by the mode switching discriminator 112 that the readout mode is to be changed. The switching image information is image information obtained by adding transition effects to the zoom image information generated before the change of the readout mode, for example.

The transition effects may be any image transform effects as long as providing visual effects. The transition effects may be fading out an image, zooming in (zoom in) or zooming out (zoom out) on the image, rotating the image, or wiping the image. The transition effects may be a combination of some of these effects. Detailed operations of the transition effects are stored in the switching image generator 125 or the memory 106 in advance.

The switching operation is carried out after the mode switching discriminator 112 discriminates that the readout mode is to be changed and before a zoom image in the post-change readout mode is displayed on the display 103. The switching process includes an operation in which the reader 110 reads out sensor information in the post-change readout mode, and an operation in which the zoom image generator 124 generates zoom image information.

The display controller 126 causes the display 103 to display the reference image, the zoom image, and the switching image.

The compressor 127 performs an image compression operation on the image information (reference image information or zoom image information). The compressor 127 stores the compressed image information in the memory 106. Any method for compressing an image is employed for the image compression operation. A compression method based on JPEG (Joint Photographic Experts Group) is used for a still image. By contrast, a compression method based on MPEG (Moving Picture Experts Group) is used for a video.

The memory controller 128 controls access to the memory 106 or the external memory 107. In other words, an operation for storing information in the memories 106 and 107 and an operation for reading out information from the memories 106 and 107, are carried out via the memory controller 128.

The photographing process by the mobile phone 101 according to the first embodiment will be described.

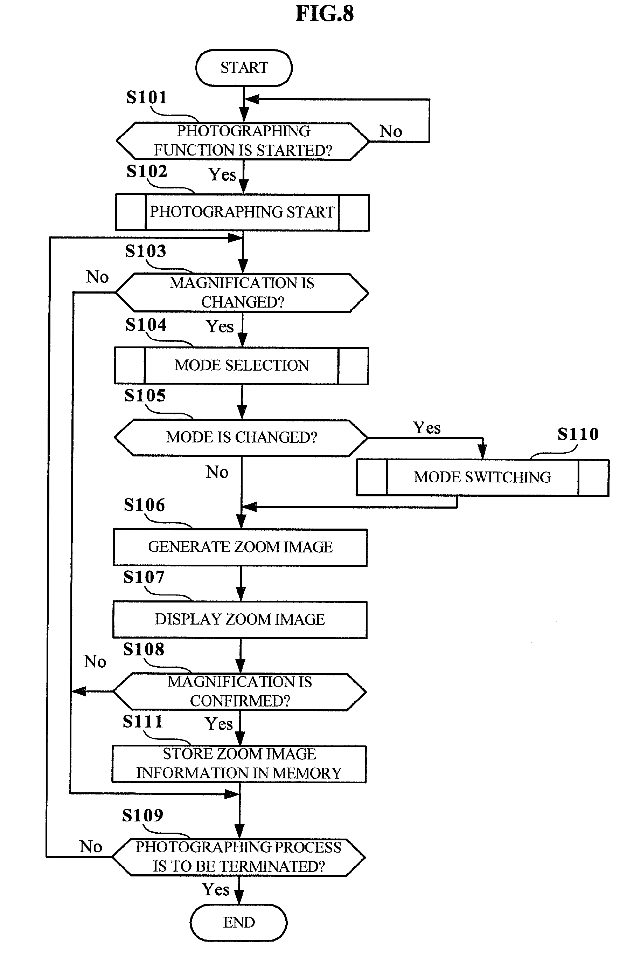

FIG. 8 is a flowchart showing the photographing process according to the first embodiment.

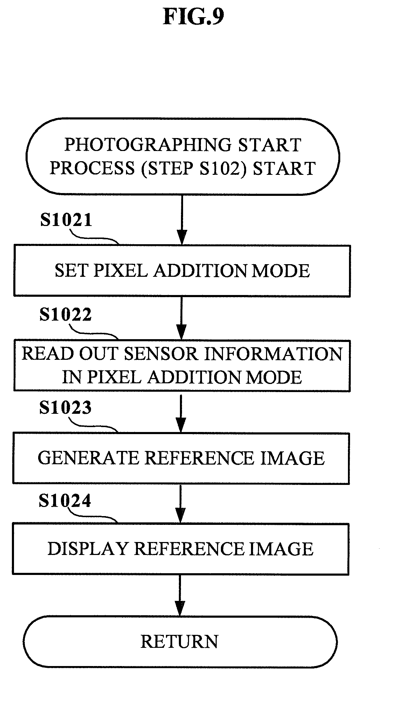

The start-up receiver 113 stands by until receiving start-up information (Step S101; No). When the start-up receiver 113 receives start-up information (Step 101; Yes), the controller 108 carries out a photographing start process (Step S102). FIG. 9 shows the photographing start process (Step S102).

The mode setter 117 sets the pixel addition mode as the readout mode according to the initial setting information (Step S1021). The pixel adder 118 reads out sensor information from the imaging sensor 105 in the pixel addition mode. The pixel adder 118 generates pixel addition information from the read-out sensor information (Step S1022).

In the following, the pixel addition algorithm will be described with a concrete example. By using the pixel addition algorithm, the pixel adder 118 divides the pixel array of the imaging sensor 105 into unit regions each including *M* pixels. Here, *M is* an integer equal to or larger than two, and smaller than the number *N* of the pixels of the imaging sensor. In this embodiment, each unit region is formed by three pixels horizontally × three pixels vertically (*M* = 9). In addition, the pixel at the center of the unit region is set as the representative pixel of the unit region. In the following description, a position of each pixel in the pixel array of the imaging sensor 105 is expressed as (*X, Y*)*.* Here, *X* denotes a horizontal position of the pixel counted from the left, while *Y* denotes a vertical position of the pixel counted from the top.

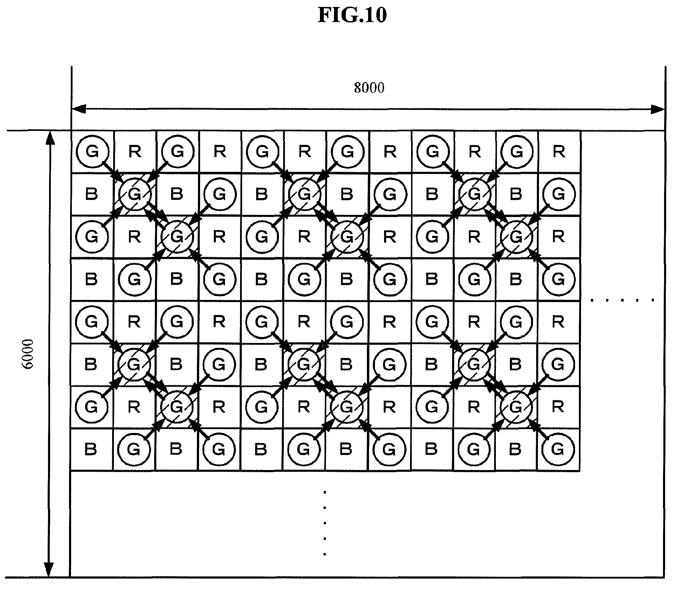

FIG. 10 shows a method of obtaining values of the G-component pixels included in the pixel addition information.

First, the pixel adder 118 sets a first unit region having the pixel at (2, 2) (first representative pixel) as the center. The pixel adder 118 adds pixel values of the G-component pixels in the first unit region except the first representative pixel. The pixel adder 118 sets the obtained sum as the pixel value of the first representative pixel.

Then, the pixel adder 118 sets a second unit region having the G-component pixel positioned lower right of the first representative pixel, that is, the pixel at (3, 3) (second representative pixel), as the center. The pixel adder 118 adds pixel values of the G-component pixels in the second unit region except the second representative pixel. The pixel adder 118 sets the obtained sum as the pixel value of the second representative pixel.

The pixel adder 118 repeats operations for setting a corresponding unit region and obtaining a pixel value of a corresponding representative pixel, for every three rows horizontally and every three columns vertically from each of the first representative pixel and the second representative pixel. The operations for setting a unit region and obtaining a pixel value of a representative pixel are repeated for all the pixels in the pixel array of the imaging sensor 105. By this method, the pixel adder 118 obtains pixel values of the G-component pixels after the pixel addition.

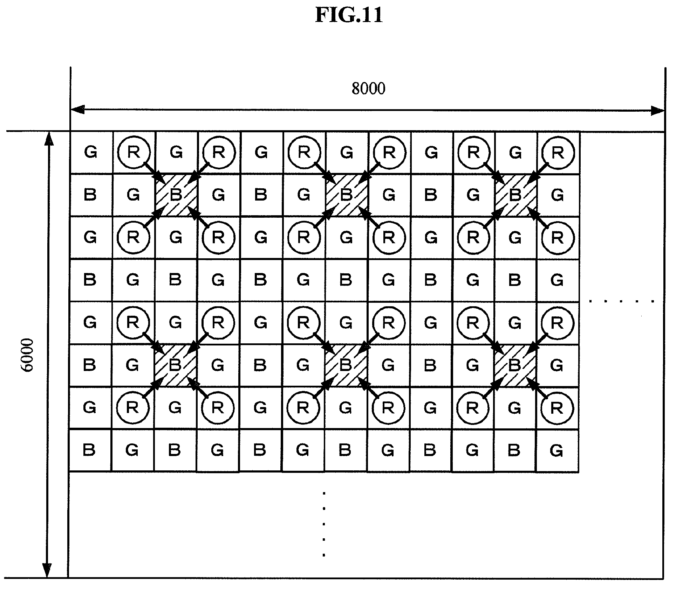

FIG. 11 shows a method of obtaining pixel values of the R-component pixels included in the pixel addition information.

The pixel adder 118 sets a third unit region having the pixel at (3, 2) (third representative pixel) as the center. The pixel adder 118 adds pixel values of the R-component pixels in the third unit region. The pixel adder 118 sets the obtained sum as the pixel value of the third representative value. The pixel adder 118 repeats operations for setting a unit region and obtaining a pixel value of a representative pixel, for every three rows horizontally and every three columns vertically from the third representative pixel. The operations for setting a unit region and obtaining a pixel value of a representative pixel are repeated for all the pixels in the pixel array of the imaging sensor 105. By this method, the pixel adder 118 obtains pixel values of the R-component pixels after the pixel addition.

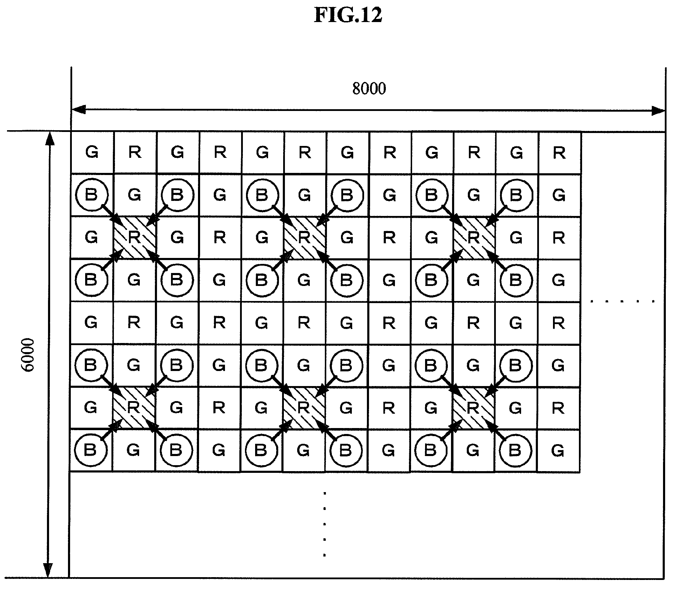

FIG. 12 shows a method of obtaining pixel values of the B-component pixels included in the pixel addition information.

The pixel adder 118 sets a fourth unit region having the pixel at (2, 3) (fourth representative pixel) as the center. The pixel adder 118 adds pixel values of the B-component pixels in the fourth unit region. The pixel adder 118 sets the obtained sum as the pixel value of the fourth representative pixel. The pixel adder 118 repeats operations for setting a unit region and obtaining a pixel value of a representative pixel, for every three rows horizontally and every three columns vertically from the fourth representative pixel. The operations for setting a unit region and obtaining a pixel value of a representative pixel are repeated for all the pixels in the pixel array of the imaging sensor 105. By this method, the pixel adder 118 obtains pixel values of the B-component pixels after the pixel addition.

Note that the operations for setting a unit region and obtaining a value of a representative pixel may be repeated for pixels in a region of the pixel array of the imaging sensor 105. For example, the operations may be repeated for pixels in a central region formed by 7800 pixels horizontally × 5800 pixels vertically in the pixel array, formed by 8000 pixels horizontally × 6000 pixels vertically, of the imaging sensor 105. In addition, the number *M* of the pixels included in each unit region does not need to be fixed. For example, *M* = 9 (three pixels horizontally × three pixels vertically) may be set for a central region, while *M* = 25 (five pixels horizontally × five pixels vertically) may be set for a surrounding region, in the pixel array of the imaging sensor 105.

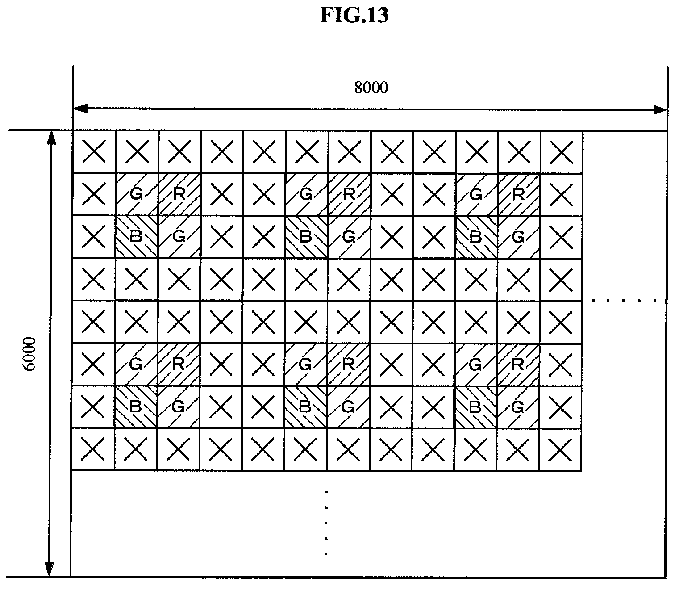

FIG. 13 shows positional relationship between each of the representative pixels whose pixel values are obtained by using the pixel addition algorithm and a corresponding pixel of the imaging sensor 105.

Among pixels of the imaging sensor 105, pixels marked with X in FIG. 13 are not selected as any representative pixel. For this reason, pixel values of the pixels marked with X in FIG. 13 are not obtained. By contrast, pixel values of the G-component representative pixels at *(2+4m,* 2+4*n*) and (3+4*m*, 3+4*n*) of the imaging sensor 105, the R-component representative pixels at (3+4*m*, 2+4*n*), and the B-component representative pixels at (2+4*m*, 3+4*n*) are obtained. Here, *m* and *n* are integers satisfying 0≤*m*≤399 and 0≤*n*≤749.

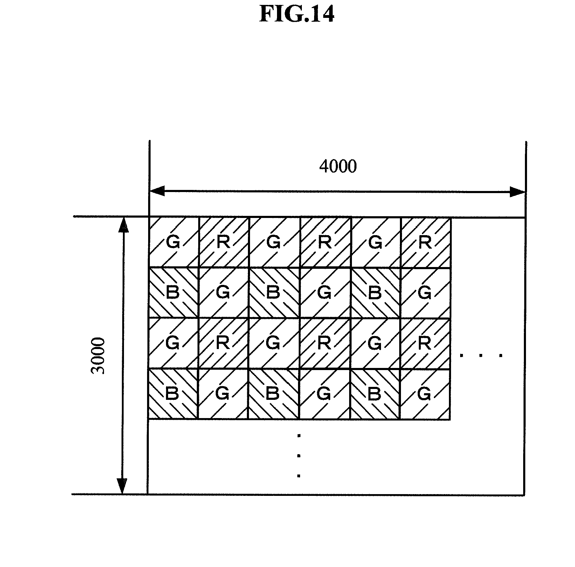

As shown in FIG. 14, pixels included in the pixel addition information are arranged in a Bayer pixel array as those of the imaging sensor 105. Moreover, pixels included in the pixel addition information are arranged in an array of 4000 pixels horizontally × 3000 pixels vertically. The number of pixels included in the pixel addition information is reduced to one fourth of the number of pixels of the imaging sensor 105.

Accordingly, using the pixel addition information enables a low-cost and small processor to read out all pieces of photographing information from the imaging sensor 105 at a frame rate of approximately 30 fps. In addition, in the pixel addition mode, pixel values of multiple pixels are added, which leads to an increase of the sensitivity. Further, the S/N ratio is also improved.

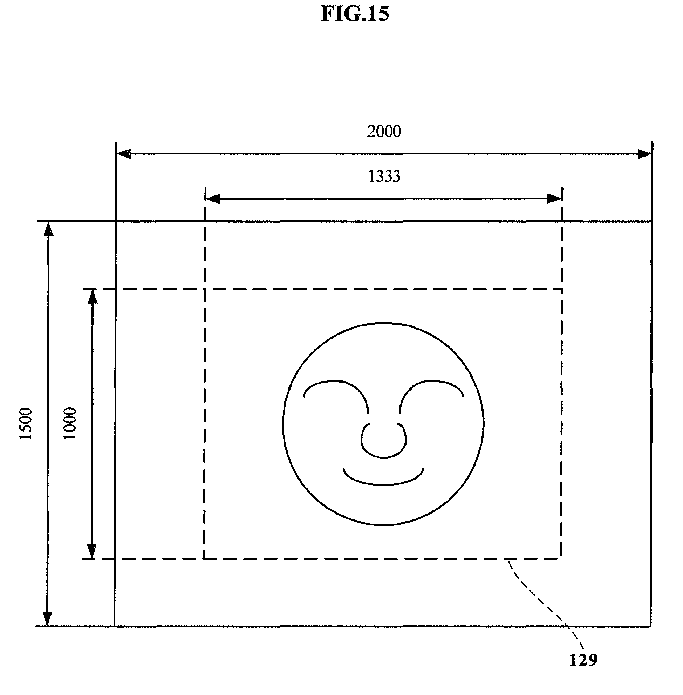

The reference image generator 123 acquires the pixel addition information. Moreover, the reference image generator 123 generates reference image information from the acquired pixel addition information (FIG. 9: Step S1023). FIG. 15 shows a reference image generated from the pixel addition information. The reference image in this embodiment is an image expressing a photographic image obtained by performing a processing process on the sensor information, with pixels the number of which is one fourth (2000 horizontally ×1500 vertically) of that of the acquired photographic image.

The display controller 126 acquires the reference image information. Moreover, the display controller 126 causes the display 103 to display the reference image based on the reference image information (FIG. 9: Step S1024). FIG. 1 shows external appearance of the mobile phone of this embodiment in a state of displaying the reference image (zoom factor of one). After these steps, the controller 108 terminates the photographing start process (Step S102).

When the magnification change receiver 116 receives magnification change information (Step S103; Yes), the mode selector 111 carries out a mode selection process (Step S104) (FIG. 8).

For example, upon pressing of the UP key 102a, the magnification change receiver 116 receives magnification change information(Step S103; Yes). In the following, description will be given of the case of changing the zoom factor from 1.4 to 1.5 as a consequence of the pressing.

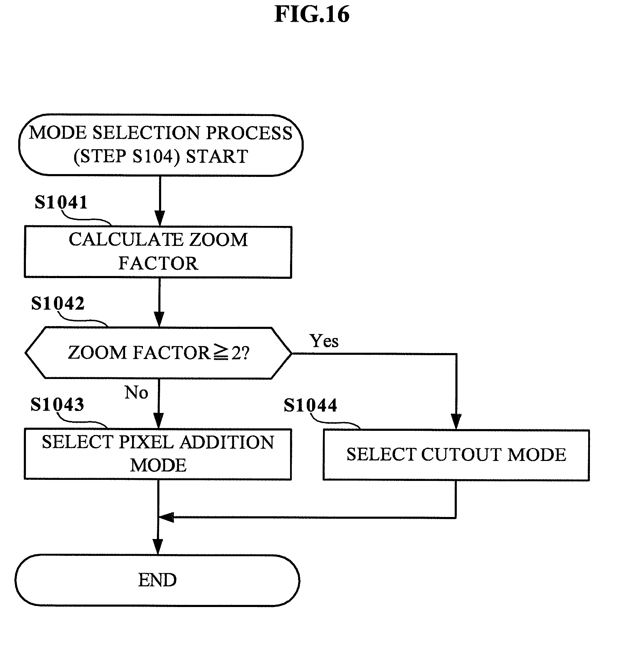

As shown in FIG. 16, the calculator 120 obtains a post-change zoom factor on the basis of the magnification change information and the current zoom factor. Thereafter, the calculator 120 generates zoom factor information (Step S1041). Assume that the current zoom factor is 1.4. When acquiring magnification change information indicating that the zoom factor is to be increased by 0.1, the calculator 120 obtains 1.5 as the post-change zoom factor (Step S1041).

The comparator 121 acquires the zoom factor information from the calculator 120. The comparator 121 discriminates whether or not the zoom factor is equal to or larger than a threshold value (2, for example), on the basis of the acquired zoom factor information (Step S1042). When the post-change zoom factor is 1.5, the comparator 121 discriminates that the zoom factor is not equal to or larger than two (Step S1042; No).

When the zoom factor is discriminated not to be equal to or larger than two (Step S1042; No), the selector 122 selects the pixel addition mode as the post-change readout mode. The selector 122 generates post-change readout mode information (Step S1043).

The mode switching discriminator 112 acquires the post-change readout mode information. Moreover, the mode switching discriminator 112 refers to pre-change readout mode information. Thereby, the mode switching discriminator 112 discriminates whether or not the readout mode is to be changed (FIG. 8: Step S105). Here, the pre-change readout mode (zoom factor of 1.4) and the post-change readout mode are both the pixel addition mode. Accordingly, the mode switching discriminator 112 discriminates that the readout mode is not to be changed (Step S105; No).

When the readout mode is discriminated not to be changed (Step S105; No), the zoom image generator 124 acquires the zoom factor information and the pixel addition information. The zoom image generator 124 performs an operation for magnifying an image by a factor of 1.5, on the pixel addition information. Moreover, the zoom image generator 124 generates zoom image information representing an image obtained by magnifying the reference image by a factor of 1.5 (Step S 106).

A method of generating zoom image information (zoom factor of 1.5) will be described. The zoom image in this embodiment is represented by 2000 pixels horizontally × 1500 pixels vertically, as the reference image.

The zoom image generator 124 obtains pixel values of the pixels in the region to be zoomed in (FIG. 15: the rectangular region surrounded by dotted lines 129). The zoom image generator 124 extracts information for obtaining the pixel values, from the pixel addition information. When the zoom factor is 1.5, the zoom image generator 124 extracts information on the pixels in a central region (2666 pixels horizontally × 2000 pixels vertically), from the pixel addition information (FIG. 14).

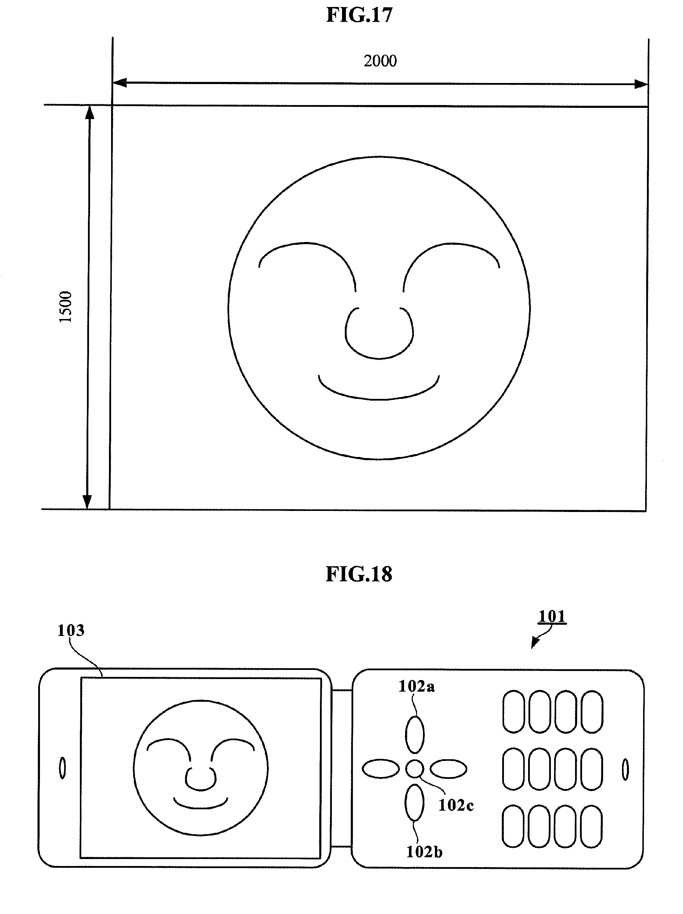

The zoom image generator 124 performs a processing process and a process of magnifying an image by a factor of 1.5, on the information extracted from the pixel addition information. In this way, the zoom image generator 124 generates zoom image information including the pixels, 2000 pixels horizontally × 1500 pixels vertically (FIG. 17).

For the operation for magnifying an image, an algorithm such as bilinear algorithm or bicubic algorithm is used, for example. Alternatively, the Lanczos algorithm or the B-spline algorithm may be used to obtain a magnified image in high quality.

The display controller 126 acquires the zoom image information. The display controller 126 causes the display 103 to display a zoom image based on the acquired zoom image information (FIG. 8: Step S107, FIG. 18).

When the magnification confirmation receiver 115 does not receive magnification confirmation information and the termination receiver 114 does not receive termination instruction information (Step S108; No, Step S109; No), the photographing process returns to the magnification change discrimination operation (Step S103).

The case of changing the zoom factor from 1.9 to 2.0 will be described.

As shown in FIG. 16, in the mode selection process (Step S104), the calculator 120 calculates a post-change zoom factor (Step S1041). Assume that the current zoom factor is 1.9. When acquiring magnification change information indicating that the zoom factor is to be increased by 0.1, the calculator 120 obtains 2.0 as the post-change zoom factor (Step S1041).

When the post-change zoom factor is 2.0, the comparator 121 discriminates that the zoom factor is two or larger (Step S1042; Yes). When the zoom factor is discriminated to be two or larger (Step S1042; Yes), the selector 122 selects the cutout mode as the post-change readout mode. Thereafter, the selector 122 generates post-change readout mode information (Step S1044).

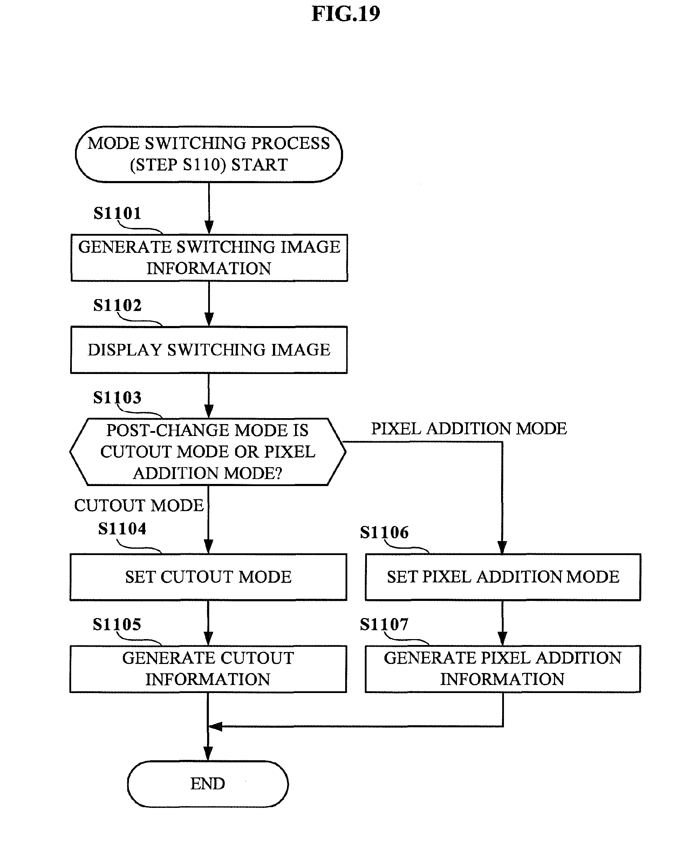

Since the pre-change readout mode (zoom factor of 1.9) and the post-change readout mode are different, the mode switching discriminator 112 discriminates that the readout mode is to be changed (FIG. 8: Step S105; Yes). When the readout mode is discriminated to be changed (Step S105; Yes), the controller 108 carries out a mode switching process (Step S110). FIG. 19 shows the mode switching process (Step S 110).

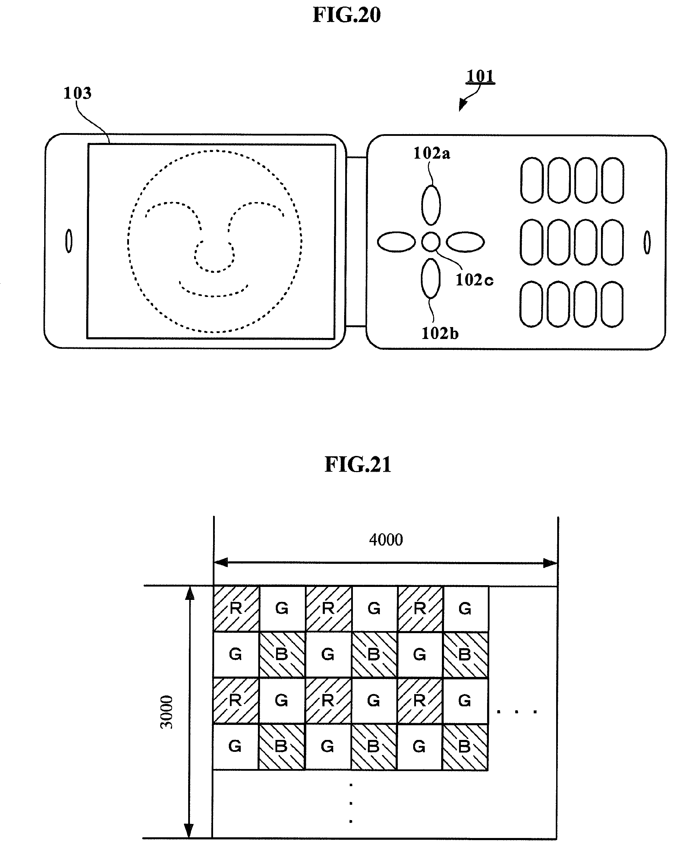

The switching image generator 125 generates switching image information (Step S1101). The display controller 126 acquires the switching image information. Moreover, the display controller 126 causes the display 103 to display a switching image (Step S102). FIG. 20 shows the switching image. This switching image is an image obtained by adding fade-out effects to the zoom image information that is the information before discrimination on the change of the readout mode is made (zoom image information at a zoom factor of 1.9). When the fade-out effects are added, the display image gradually darkens and eventually disappears.

The switching image is displayed on the display 103 while the switching process is being carried out. Since the switching image is displayed, display on the display 103 does not freeze.

The mode setter 117 acquires the post-change readout mode information from the mode switching discriminator 112. On the basis of the post-change readout mode information, the mode setter 117 sets a post-change readout mode (FIG. 19: Step S 1103). When the post-change readout mode is the cutout mode (Step S1 103; cutout mode), the mode setter 117 sets the cutout mode as the readout mode (Step S 1104). The cutouter 119 reads out the sensor information in the cutout mode. The cutouter 119 generates cutout information from the read-out sensor information (Step S 1105). Thereafter, the controller 108 terminates the mode switching process (Step S 110).

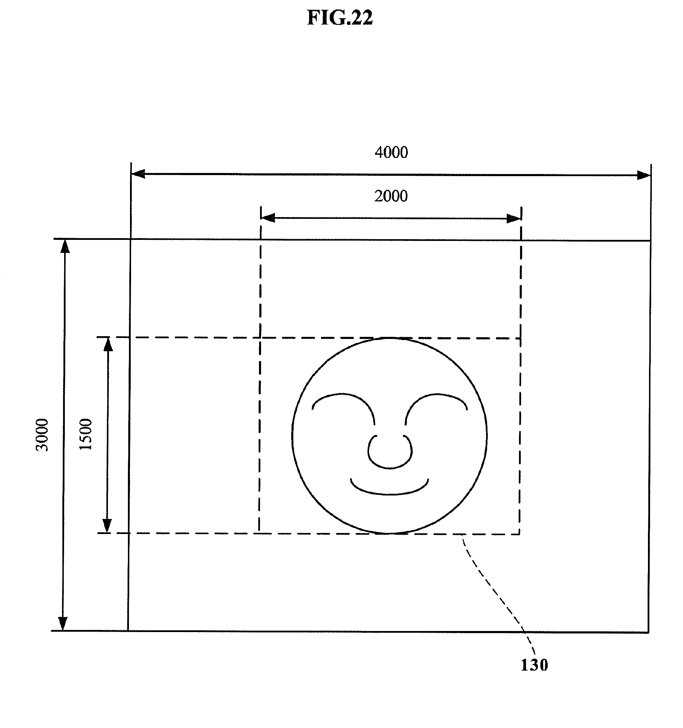

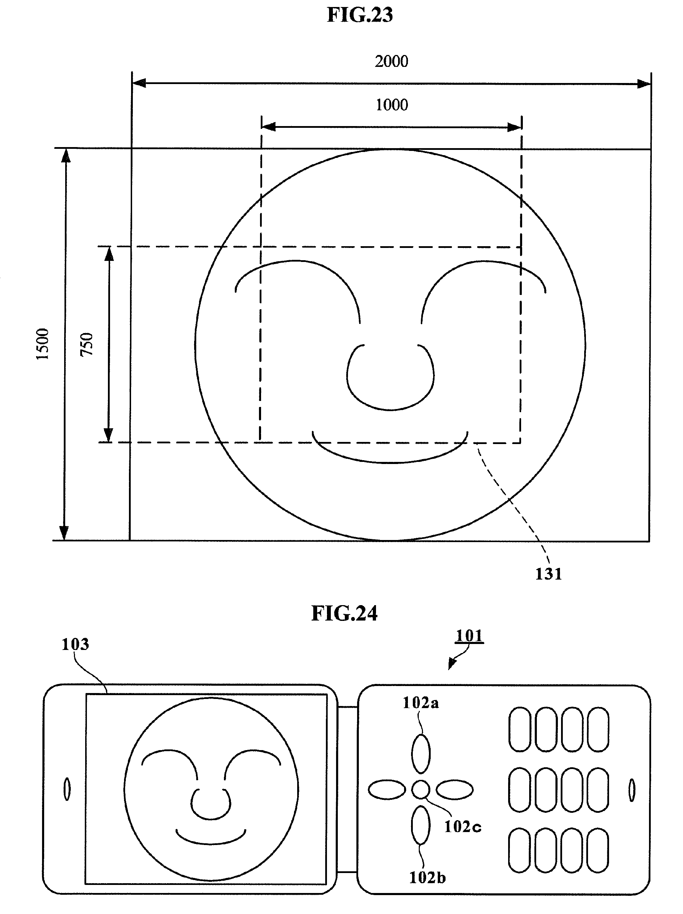

The cutout information is information on individual pixels included in a predetermined central region of the imaging sensor 105. The cutout information according to this embodiment is information on the pixels, 4000 pixels horizontally × 3000 pixels vertically, that are positioned in the center of the sensor information (FIG. 3), as shown in FIG. 21. FIG. 22 shows relationship between a cutout image and the reference image, the cutout image being obtained by performing a processing process on the cutout information. The cutout image is a part of the reference image represented by 4000 pixels horizontally × 3000 pixels vertically. Specifically, the cutout image agrees with the region positioned in the center of the reference image and formed by 2000 pixels horizontally × 1500 pixels vertically. FIG. 23 shows the cutout image. The cutout image corresponds to a zoom image obtained by magnifying the reference image by a factor of two.

The zoom image generator 124 acquires the zoom factor information and the cutout information (FIG. 8). The zoom image generator 124 performs a processing process on the cutout information. The zoom image generator 124 generates zoom image information by magnifying the reference image by a factor of 2.0, by the processing process (Step S106). The display controller 126 acquires the zoom image information. The display controller 126 causes the display 103 to display a zoom image based on the acquired zoom image information (Step S 107, FIG. 24).

When the magnification confirmation receiver 115 does not receive magnification confirmation information and the termination receiver 114 does not receive the termination instruction information (Step S108; No, Step S109; No), the photographing process returns to the magnification change discrimination operation (Step S103).

The case of changing the zoom factor from 2.0 to 4.0 will be described. In this case, the mode selector 111 selects the cutout mode as the post-change readout mode (Step S104). Since the readout mode is the same before and after the change of the zoom factor, the mode switching discriminator 112 discriminates that the readout mode is not to be changed (Step S 105; No). The zoom image generator 124 generates zoom image information from the zoom factor information and the cutout information (Step S106).

The zoom image generator 124 obtains pixel values of the pixels in the region to be zoomed in (FIG. 23: the rectangular region surrounded by dotted lines 131). The zoom image generator 124 extracts information for obtaining the pixel values, from the cutout information. When the zoom factor is four, the zoom image generator 124 extracts information on the pixels in a central region (2000 pixels horizontally × 1500 pixels vertically), from the cutout information.

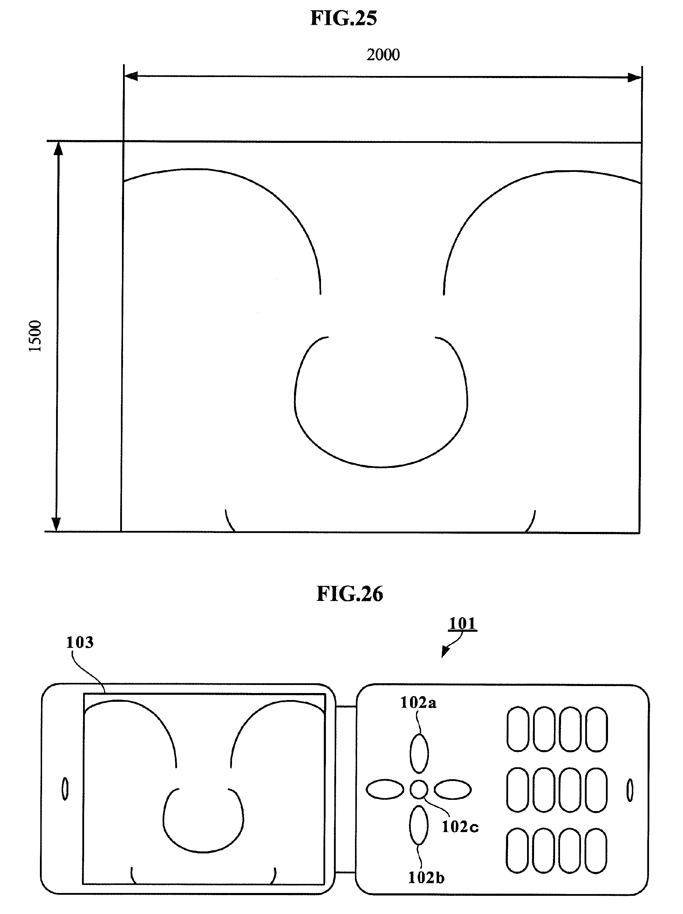

Subsequently, the zoom image generator 124 performs a processing process and a process of magnifying the image by a factor of two, on the information extracted from the cutout information. In this way, the zoom image generator 124 generates zoom image information formed by 2000 pixels horizontally × 1500 pixels vertically (FIG. 25).

Since the cutout image corresponds to an image obtained by magnifying the reference image by a factor of two as described above, the factor of the magnification used in the magnification process is small in the cutout mode. Consequently, the cutout mode can reduce image deterioration such as blurs and juggies due to the magnification process. In addition, since the information extracted from the cutout information is part of the sensor information, the cutout mode can produce a highly fine image.

The display controller 126 acquires the zoom image information. The display controller 126 causes the display 103 to display a zoom image based on the acquired zoom image information (FIG. 8: Step S107, FIG. 26).

When the magnification confirmation receiver 115 does not receive magnification confirmation information and the termination receiver 114 does not receive termination instruction information (Step S108; No, Step S109; No), the photographing process returns to the magnification change discrimination operation (Step S103).

The case of changing the zoom factor from 2.0 to 1.9 upon pressing of the DOWN key 102b will be described. The mode selector 111 selects the pixel addition mode as the post-change readout mode (FIG. 8: Step S104). Since the readout modes before and after the change of the zoom factor are different, the mode switching discriminator 112 discriminates that the readout mode is to be changed (Step S105; Yes).

When the readout mode is discriminated to be changed (Step S105; Yes), the controller 108 carries out the mode switching process (Step S110). As shown in FIG. 19, the switching image generator 125 generates switching image information (Step S1101). The display controller 126 acquires the switching image information. The display controller 126 causes the display 103 to display a switching image based on the acquired switching image information (Step S 1102). The switching image is an image obtained by adding fade-out effects to the zoom image information that is information before discrimination on the change of the readout mode is made (zoom image information on the zoom image at a factor of 2.0).

On the basis of the post-change readout mode information, the mode setter 117 sets the pixel addition mode as the post-change readout mode (FIG. 19: Step S1106). The pixel adder 118 reads out sensor information in the pixel addition mode. The pixel adder 118 generates pixel addition information from the read-out sensor information (Step S 1107). Thereafter, the controller 108 terminates the mode switching process (Step S 110).

The zoom image generator 124 acquires the zoom factor information and the pixel addition information (FIG. 8). The zoom image generator 124 performs a process of magnifying an image by a factor of 1.9, on the acquired pixel addition information. Thereby, the zoom image generator 124 generates zoom image information obtained by performing the process of magnifying the reference image by a factor of 1.9 (Step S106). The display controller 126 acquires the zoom image information. The display controller 126 causes the display 103 to display a zoom image based on the acquired zoom image information (Step S107).

As described above, a user can change the zoom factor by pressing the UP key 102a or the DOWN key 102b. A user presses the confirmation key 102c at a desired zoom factor while looking at the zoom images (FIGS. 1, 18, 24, and 26) on the display 103 of the mobile phone 101. Upon pressing of the confirmation key 102c, the magnification confirmation receiver 115 receives magnification confirmation information (Step S108; Yes). Upon receipt of the magnification confirmation information (Step S108; Yes), the compressor 127 performs a compression process and a resizing process on the zoom image information generated by the zoom image generator 124. Thereafter, the compressor 127 stores the information subjected to the compression process, in the memory 106 (Step S111).

After the storing operation (Step S111), the termination receiver 114 carries out a termination discrimination operation (Step S109). Moreover, when the magnification change receiver 116 does not receive magnification change information (Step S103; No), the termination receiver 114 carries out the termination discrimination operation (Step S109). When the termination receiver 114 does not receive termination instruction information (Step S109; No), the photographing process returns to the magnification change discrimination operation (Step S103). When the termination receiver 114 receives termination instruction information (Step S109; Yes), the termination receiver 114 terminates the photographing process.

According to the first embodiment, when the UP key 102a is pressed, the reference image (FIG. 1) and then zoom images (FIGS. 18, 24, and 26), which become gradually larger in zoom factor in this order, are displayed in succession on the display 103. When the DOWN key 102b is pressed, the images displayed in succession on the display 103 become gradually smaller in zoom factor and then return to the reference image.

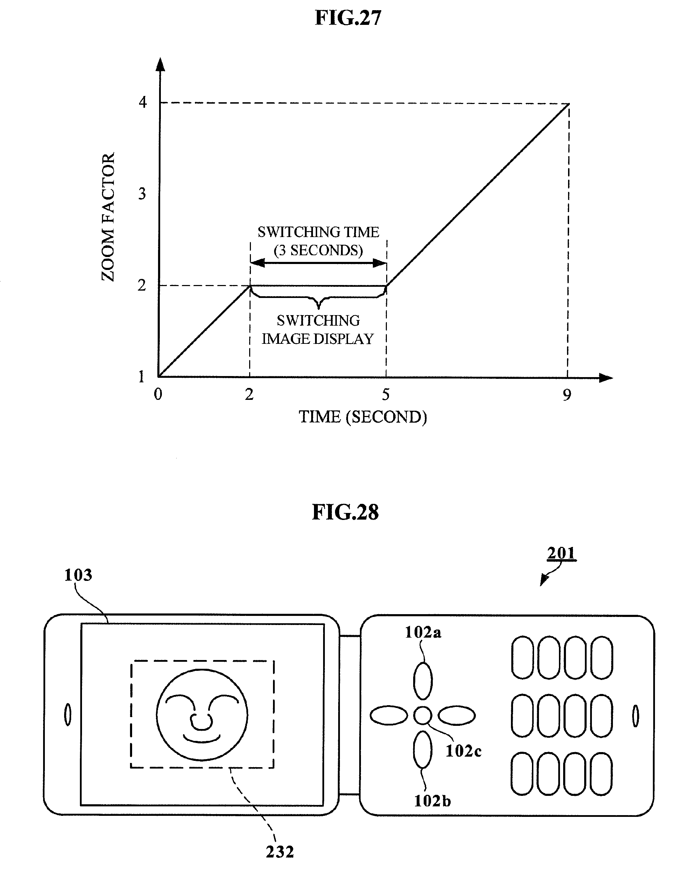

FIG. 27 shows relationship between change of the zoom factor and time according to this embodiment. The horizontal axis in the FIG. 27 represents time period in which the UP key 102a is pressed. The vertical axis represents a zoom factor. The speed at which the zoom factor changes depends on the performance of the mobile phone 101. In FIG. 27, the zoom factor is doubled two seconds after the pressing of the UP key 102a. In FIG. 27, generation of zoom image information in the post-change readout mode takes three seconds. Moreover, increase of the zoom factor from two to four takes four seconds.

As shown in FIG. 27, a switching image is displayed on the display 103 for three seconds between the change of the readout mode and the generation of the zoom image information. This prevents display on the display 103 from freezing.

In the above, description has been given of the first embodiment of the present invention. However, concrete aspects of this embodiment are not limited to this.

The mobile phone 10 is an example of a mobile terminal device. A mobile terminal device may be a PHS (Personal Handy-phone System) or a PDA (Personal Digital Assistant). In addition, the camera provided in the mobile phone is an example of an imaging device. The imaging device may be provided in a single-lens reflex camera, a compact camera, a video camera, or a PC (Personal Computer).

Moreover, the display 103 may be a liquid crystal display such as a QVGA (320×240×RGB), a VGA (640×480×RGB), a wide VGA (800×480×RGB), or a full-wide VGA (854×480×RGB). Alternatively, the display 103 maybe composed of an organic EL (Electro Luminescence) display.

In this embodiment, the pixel addition algorithm (pixel addition mode) is employed as reduction readout means. However, reduction readout means is not limited to this.

A thinning algorithm (thinning mode) can be adopted as reduction readout means. The thinning algorithm reduces the number of pixels by thinning out pixels from the pixel array of the imaging sensor 105 at a predetermined interval. In other words, in the thinning mode, a piece of sensor information is read out vertically for every *M* pixels from the pixel array of the imaging sensor 105. Alternatively, the pieces of sensor information on multiple pixels may be read out for every *M* pixels. In addition, *M* does not need to be a fixed number.

The image information to which the switching image generator 125 adds transition effects is not limited to a zoom image before discrimination is made on the change of the readout mode. The image information to which the switching image generator 125 adds transition effects may be zoom image information generated before the change of the readout mode or the reference image information. Moreover, the image information to which the switching image generator 125 adds transition effects may be image information representing a still image or a video stored in the memory 106 in advance. Further, the switching image generator 125 may acquire switching image information representing a still image or a video stored in the memory 106 in advance.

The threshold value for changing the readout mode is not limited to two. The threshold value may be set at any value. The number of pixels included in the cutout information is desirably a number obtained by multiplying each of the number of pixels arranged horizontally and the number of pixels arranged vertically in the sensor information by the inverse number of the threshold value, as described in this embodiment. By determining the number of pixels in this way, an image obtained by performing a processing process on the cutout information is an image obtained by magnifying the reference image by a zoom factor equal to the threshold value. This enables the zoom image generator 124 to easily generate a zoom image at a zoom factor equal to the threshold value. Hence, the switching process requires a short time period.

### (Second Embodiment)

A second embodiment is different from the first embodiment in the method of setting a zoom factor. Specifically, the zoom factor is set by an instruction provided by a user regarding a reference image displayed on the display 103.

FIG. 28 shows external appearance of a mobile phone 201 according to the second embodiment. In the case of the mobile phone 201, a zoom region frame 232 (FIG. 28: dotted lines) is displayed in a reference image.

The center of the zoom region frame 232 is located at the center of the reference image. Moreover, the zoom region frame 232 surrounds a rectangular region having the same aspect ratio as that of the reference image. A user changes size of the zoom region frame 232 by pressing the key buttons 102a to 102c. Here, pressing 102a enlarges the zoom region frame 232. Moreover, pressing 102b reduces the size of the zoom region frame 232. A zoom factor is obtained to be the inverse number of the ratio of the size of the reference image to the size of the zoom region frame 232.

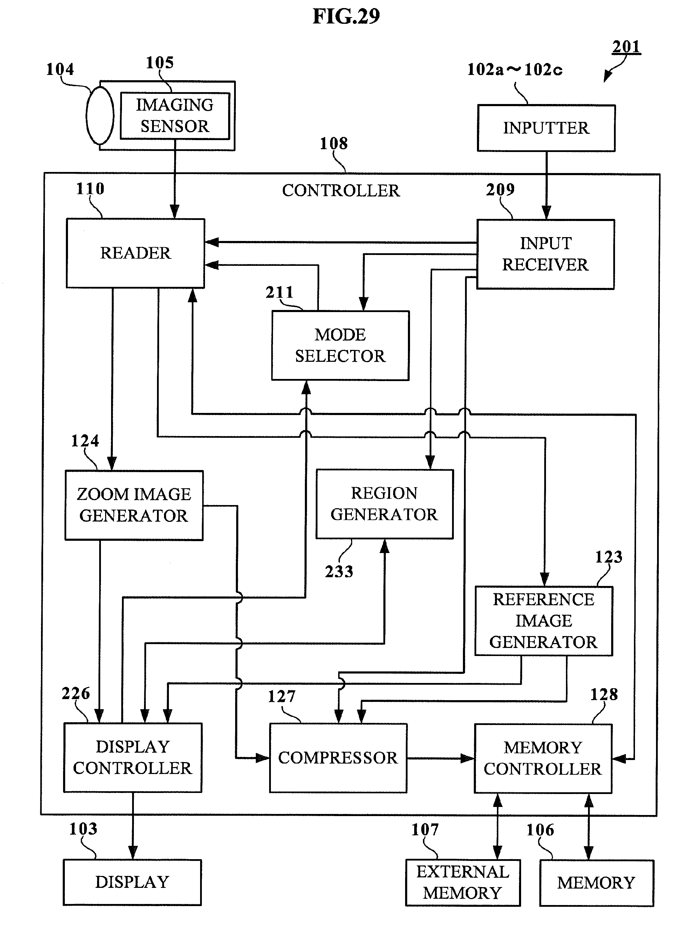

FIG. 29 shows configuration of the mobile phone 201 according to the second embodiment.

The mobile phone 201 includes a region generator 233. In addition, the mobile phone 201 includes an input receiver 209, a mode selector 211, and a display controller 226, instead of the input receiver 109, the mode selector 111, and the display controller 126 of the first embodiment.

This embodiment is different from the first embodiment in that the input receiver 209, the mode selector 211, the display controller 226, and the region generator 233 are included. Accordingly, description will be given of these components, and description of the other components is omitted.

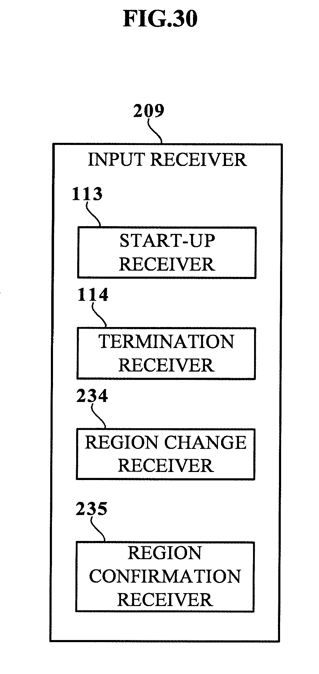

FIG. 30 shows configuration of the input receiver 209 according to the second embodiment. As shown in FIG. 30, the input receiver 209 includes the start-up receiver 113, the termination receiver 114, a region change receiver 234, and a region confirmation receiver 235.

The start-up receiver 113 and the termination receiver 114 of this embodiment are the same as the start-up receiver 113 and the termination receiver 114 of the first embodiment (FIG. 5). Description of the start-up receiver 113 and the termination receiver 114 is omitted.

The region change receiver 234 receives region change information indicating a change of the size of the zoom region frame 232.

The region confirmation receiver 235 selects the size of the zoom region frame 232. Moreover, the region confirmation receiver 235 receives region confirmation information recording a photographic image in the region surrounded by the zoom region frame 232.

Instruction information corresponds to the key buttons 102a to 102c as in the first embodiment.

For example, when a user presses the enlargement key 102a, the region change receiver 234 receives region change information for enlarging the zoom region frame 232 (zoom out). By contrast, when a user presses the reduction key 102b, the region change receiver 234 receives region change information for reducing the zoom region frame 232 in size (zoom in).

The region generator 233 generates instructed region information indicating the zoom region frame 232 (FIG. 29), from the region change information. Specifically, the instructed region information indicates the zoom region frame 232 in the changed size.

The display controller 226 causes the display 103 to display the reference image and the zoom region frame 232.

The mode selector 211, as the mode selector 111 of the first embodiment, selects the pixel addition mode or the cutout mode as the readout mode, on the basis of a zoom factor and a threshold value.

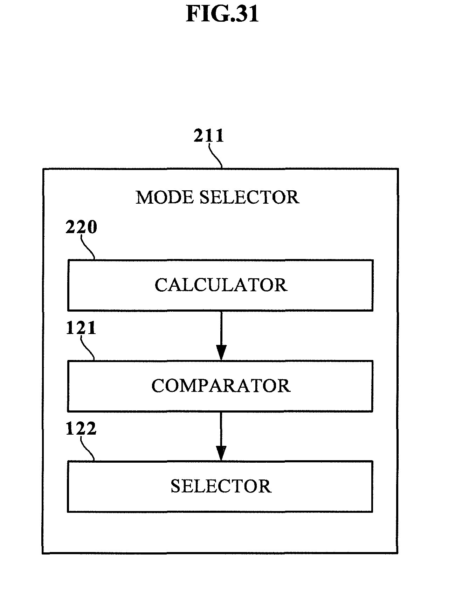

FIG. 31 shows configuration of the mode selector 211 according to the second embodiment. The mode selector 211 includes a calculator 220, the comparator 121, and the selector 122.

The comparator 121 and the selector 122 are the same as the comparator 121 and the selector 122 of the first embodiment (FIG. 7). Description of the comparator 121 and the selector 122 is omitted.

When the region confirmation receiver 235 receives region confirmation information, the calculator 220 calculates a zoom factor on the basis of size of the zoom region frame 232. Specifically, the calculator 220 obtains, as the zoom factor, the inverse number of the ratio of the size of the reference image to the size of the zoom region frame 232 on the display 103.

Next, a photographing process of the mobile phone 201 according to this embodiment will be described.

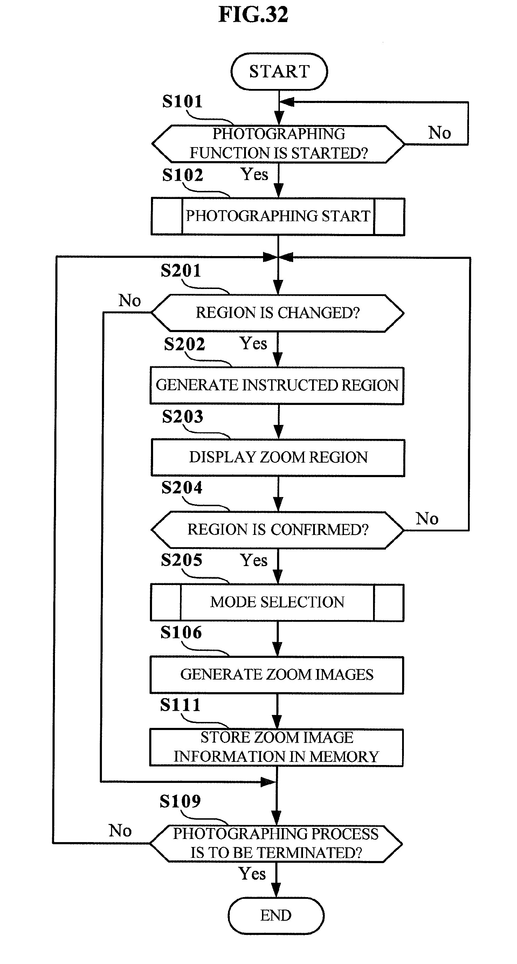

FIG. 32 is a flowchart of the photographing process by the mobile phone 201. The start-up discrimination operation (Step S101) and the photographing start process (Step S102) of this embodiment are the same as the start-up discrimination operation and the photographing start process of the first embodiment (FIG. 8). Description of these steps is omitted.

When the region change receiver 234 receives region change information (Step S201; Yes), the region generator 233 generates instructed region information (Step S202).

The instructed region information indicates the zoom region frame 232 in the changed size.

For example, assume that the region change receiver 234 receives region change information indicating that the enlargement key 102a is pressed once. In this case, the region generator 233 generates instructed region information indicating the zoom region frame 232 that is larger than the current zoom region frame 232 by one level. By contrast, when the reduction key 102b is pressed once, the region generator 233 generates instructed region information indicating the zoom region frame 232 that is smaller than the current zoom region frame 232 by one level.

When the enlargement key 102a is pressed continuously, the region generator 233 sequentially generates pieces of instructed region information for enlarging the zoom region frame 232 in stages according to pressing time. Specifically, when the enlargement key 102a is pressed continuously, the region generator 233 sequentially generates pieces of instructed region information for enlarging the zoom region frame 232 in stages in proportion to pressing time. Alternatively, the region generator 233 may sequentially generate pieces of instructed region information for enlarging the zoom region frame 232 at an accelerated rate with respect to pressing time. By contrast, when the reduction key 102b is pressed continuously, the region generator 233 sequentially generates pieces of instructed region information for reducing the size of the zoom region frame 232 in stages according to pressing time.

For example, when the number of display pixels of the display is 640 horizontally × 480 vertically, one level of the size of the zoom region frame 232 corresponds to eight pixels horizontally and six pixels vertically. One level of the size may be the size corresponding to a zoom factor of 0.1.

The display controller 126 acquires the instructed region information. Then, the display controller 126 causes the display 103 to display the zoom region frame 232 indicated by the instructed region information (Step S203).

When the region confirmation receiver 235 does not receive region confirmation information (Step S204; No), the region change receiver 234 continues the region change discrimination operation (Step S201).

When the region confirmation receiver 235 receives region confirmation information (Step S204; Yes), the mode selector 111 carries out a mode selection process (Step S205).

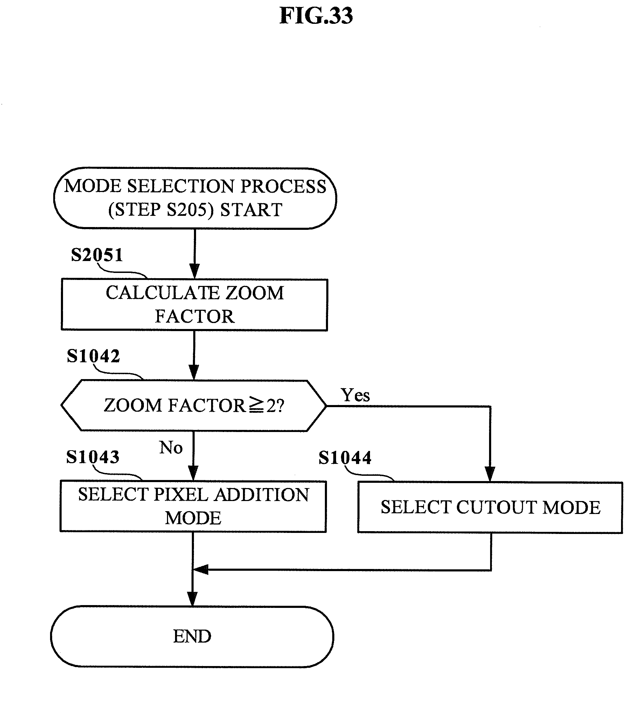

FIG. 33 shows the mode selection process (Step S205) according to the second embodiment.

The calculator 120 calculates a zoom factor on the basis of the zoom region frame 232 used for selecting the region and the reference image (Step S2051).

The calculator 120 acquires information indicating size of the zoom region frame 232 used for selecting the region.

The calculator 120 acquires information indicating size of the display region of the displayed reference image from the display controller 226 or the memory 106. Specifically, the size of the display region of the reference image is represented by using the number of the pixels (640 horizontally × 480 vertically) of the display 103.

The calculator 120 obtains, as a zoom factor, the inverse number of the ratio of the size of the display region of the reference image to the size of the zoom region frame 232. Then, the calculator 120 generates zoom factor information indicating the obtained zoom factor.

For example, the number of the horizontal display pixels of the display 103, that is, 640 pixels, is used to represent the size of the display region of the reference image. Moreover, the number of horizontal pixels of the zoom region frame 232 is used to represent the size of the zoom region frame 232. When the number of horizontal pixels of the zoom region frame 232 is 427, the calculator 120 obtains 1.5 (rounded off to one decimal place) as the zoom factor. When the number of horizontal pixels of the zoom region frame 232 is 160, the calculator 120 obtains four as the zoom factor.

The comparator 121 discriminates whether or not the obtained zoom factor is equal to or larger than the threshold value (2), as in the first embodiment (Step S1042). On the basis of the discrimination result from the comparator 121, the selector 122 selects the pixel addition mode or the cutout mode as the readout mode (Steps S1043 andS 1044). The operations (Steps S1042 to S1044) are the same as those in the first embodiment. Description of these operations is omitted.

The zoom image generator 124 generates zoom image information (FIG. 32: Step S106). The compressor 127 stores the information subjected to a compression process in the memory 106 (Step S111). The operations (Steps S106 and S111) are the same as those in the first embodiment. Description of these operations is omitted.

After the storing operation (Step S111), the termination receiver 114 carries out the termination discrimination operation (Step S109). When the region change receiver 234 does not receive region change information (Step S201; No), the termination receiver 114 carries out the termination discrimination operation (Step S109). The termination discrimination operation (Step S109) is the same as that in the first embodiment. Description of the termination operation (Step S109) is omitted. After these steps, the photographing process is terminated.

According to this embodiment, a zoom factor is obtained on the basis of the size of the zoom region frame 232, instead of being changed in stages. Then, on the basis of the obtained zoom factor, the zoom image generator 124 generates zoom image information. For this reason, the readout mode does not change while the zoom factor is being changed. Hence, according to this embodiment, zoom image information can be generated in a short time period.

For example, the readout mode is changed from the pixel addition mode to the cutout mode. Assume that generation of the zoom image information takes three seconds, and the zoom region frame 232 corresponding to a zoom factor of four is selected two seconds after the reference image is displayed. In this case, zoom image information on a zoom image at a factor of four is generated five seconds after the selection. Then, the zoom image is displayed on the display 103. As described above, even when the readout mode is changed, the zoom image information can be generated in a short time period.

This enables the display 103 to display the zoom image after a short time period, and hence display is less likely to freeze.

In the above, the second embodiment of the present invention has been described. However, concrete aspects of this embodiment are not limited to this.

For example, the zoom region frame 232 is assumed to be a frame formed of dotted lines in this embodiment. However, the zoom region frame 232 is not limited to this. The zoom region frame 232 may be displayed on the display 103 in such a manner that the inside and the outside of the zoom region frame 232 are different in color tone or transmittance. Alternatively, an image of only the inside of the zoom region frame 232 at the same magnification or a magnified image of the inside of the zoom region frame 232 may be displayed on the display 103.

The zoom factor may be changed after the selection. The post-change zoom factor may be set in any range. However, the post-change zoom factor is desirably set within the range that does not require a change of the readout mode.

This prevents occurrence of a change of the readout mode. Hence, the zoom image generator 124 can generate the post-change zoom image information in a short time period.

The readout mode may be set from three or more types, according to the zoom factor.

Specifically, when the zoom factor is equal to or larger than one and smaller than two, the pixel addition mode is adopted. When the zoom factor is equal to or larger than two and smaller than three, a first cutout mode is adopted. Further, when the zoom factor is equal to or larger than three, a second cutout mode is adopted.

In the first cutout mode, pieces of information on the 4000 pixels horizontally and 3000 pixels vertically are extracted from the sensor information. By contrast, in the second cutout mode, pieces of information on the 2667 pixels horizontally and 2000 pixels vertically are extracted from the sensor information.

When a user selects the zoom region frame 232 corresponding to a zoom factor of four, the readout mode is changed from the pixel addition mode for generating reference image information to the second cutout mode.

As described above, even when the zoom factor is large, the readout mode only needs to be changed once. Hence, zoom image information can be generated in a short time period.

### (Third Embodiment)

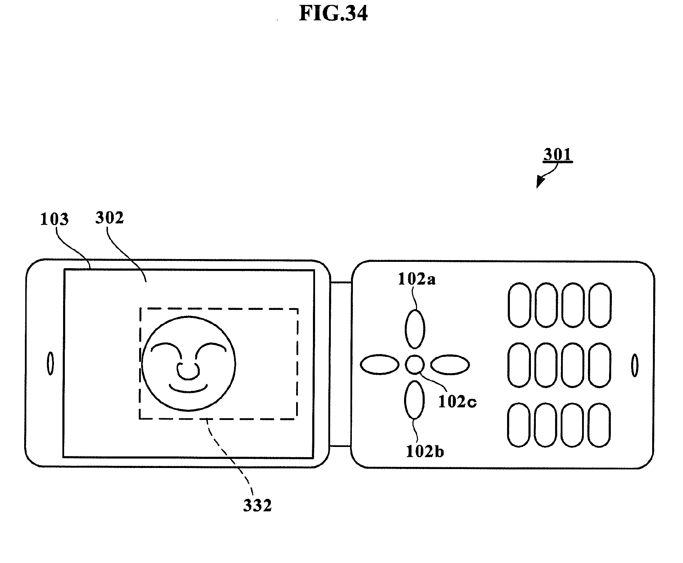

A mobile phone 301 according to a third embodiment of the present invention further includes a touch panel 302 as an inputter, as shown in FIG. 34. The touch panel 302 detects contact to the display 103 (display screen). Then, from the detection result, the touch panel 302 generates contact information. Here, the contact information indicates a position at which the contact is detected on the display screen. The touch panel 302 comprises a resistance film overlaid on the display 103, a sensor for detecting electric potential, and the like.

A user can set a zoom region frame 332 at any position on the reference image, as shown in FIG. 34. For example, a user slides his or her finger tip on the touch panel 302, and the zoom region frame 232 corresponding to the path of sliding is set.

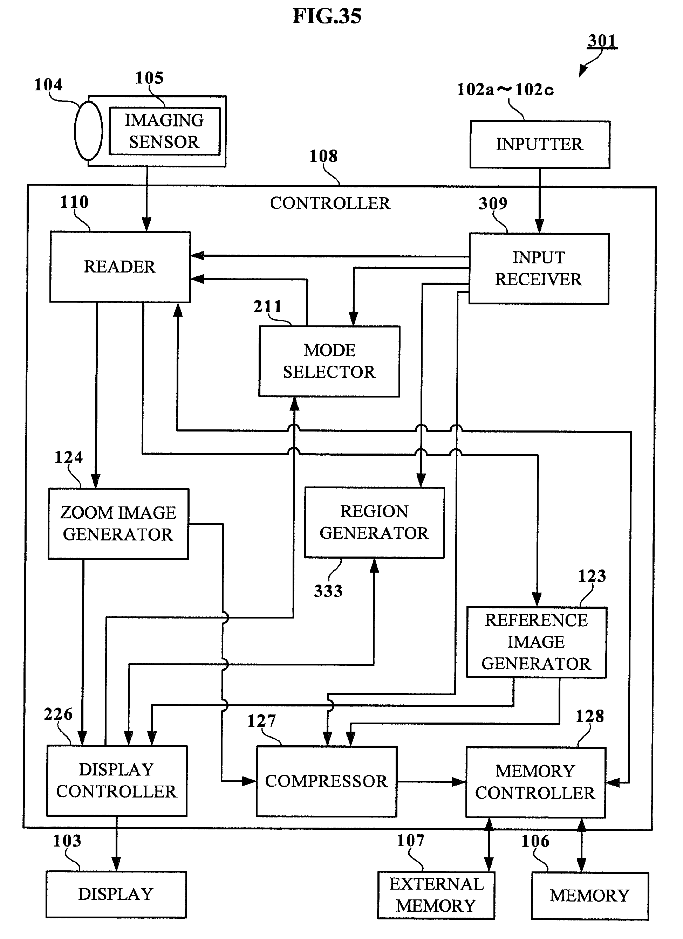

FIG. 35 shows configuration of the mobile phone 301 according to the third embodiment.

The mobile phone 301 includes an input receiver 309 and a region generator 333, instead of the input receiver 209 and the region generator 233 of the second embodiment (FIG. 29).

The other components of the mobile phone 301 are the same as those of the second embodiment. Here, description will be given of the input receiver 309 and the region generator 333.

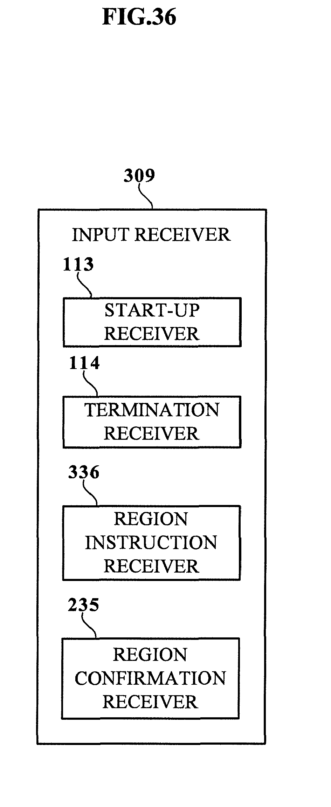

FIG. 36 shows configuration of the input receiver 309 according to this embodiment. As shown in FIG. 36, the input receiver 309 includes the start-up receiver 113, the termination receiver 114, a region instruction receiver 336, and the region confirmation receiver 235.

The start-up receiver 113, the termination receiver 114, and the region confirmation receiver 235 are the same as the start-up receiver 113, the termination receiver 114, and the region confirmation receiver 235 of the second embodiment (FIG. 30). Description of these components is omitted.

The region instruction receiver 336 receives contact information from the touch panel 302. The contact information indicates the path of finger-sliding on the touch panel 302 (the display 103) by a user. The path may be limited to one satisfying a predetermined condition. For example, the path is limited to one surrounding a closed region on the display screen.

From the contact information, the region generator 333 generates instructed region information indicating the zoom region frame 232 (FIG. 35).

The instructed region information indicates the zoom region frame 232 corresponding to the path in terms of position and size. The zoom region frame 232 may be approximated by the region generator 333 in a predetermined method.

Next, a photographing process of this embodiment will be described.

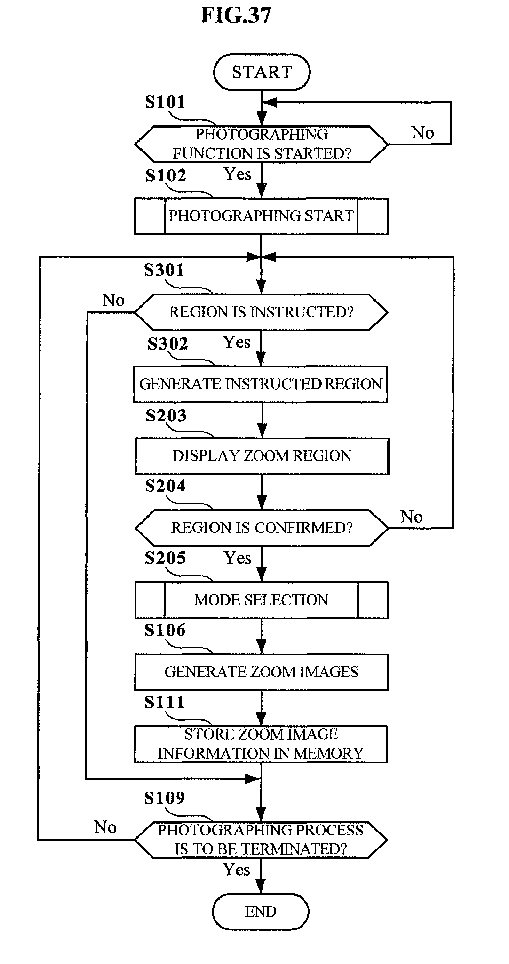

FIG. 37 is a flowchart of the photographing process according to the third embodiment.

As shown in FIG. 37, the photographing process according to this embodiment includes a region instruction discrimination operation (Step S301) and an instructed region generation (Step S302), instead of the region change discrimination operation (Step S201) and the instructed region generation (Step S202) of the second embodiment. The other processes and operations of this embodiment are the same as those of the second embodiment. Description will be given of the region instruction operation (Step S301) and the instructed region generation (Step S302). Description of the other processes and operations is omitted.

When the region instruction receiver 336 receives contact information (Step S301; Yes), the region generator 333 generates instructed region information (Step S302). When the contact information indicates a closed path, the region generator 333 generates instructed region information. For example, the zoom region frame 232 may be approximated to a rectangle having the maximum value of the path in a vertical direction as a vertical length and the maximum value of the path in a horizontal direction as a horizontal length. Moreover, the zoom region frame 232 is positioned so that the barycenter of the zoom region frame 232 may match the barycenter of the path.

On the other hand, when the region instruction receiver 336 does not receive contact information (Step S301; No), the termination receiver 114 carries out the termination operation (Step S109).

According to this embodiment, a user can set a desired region of the reference image as the zoom region frame 232. In addition to the effect of the second embodiment, according to this embodiment, a region desired by a user can be magnified by a desired zoom factor.

In the above, the third embodiment of the present invention has been described. However, concrete aspects of this embodiment are not limited to this.

### For example, the condition for the contact information is not limited to the path surrounding a closed region.

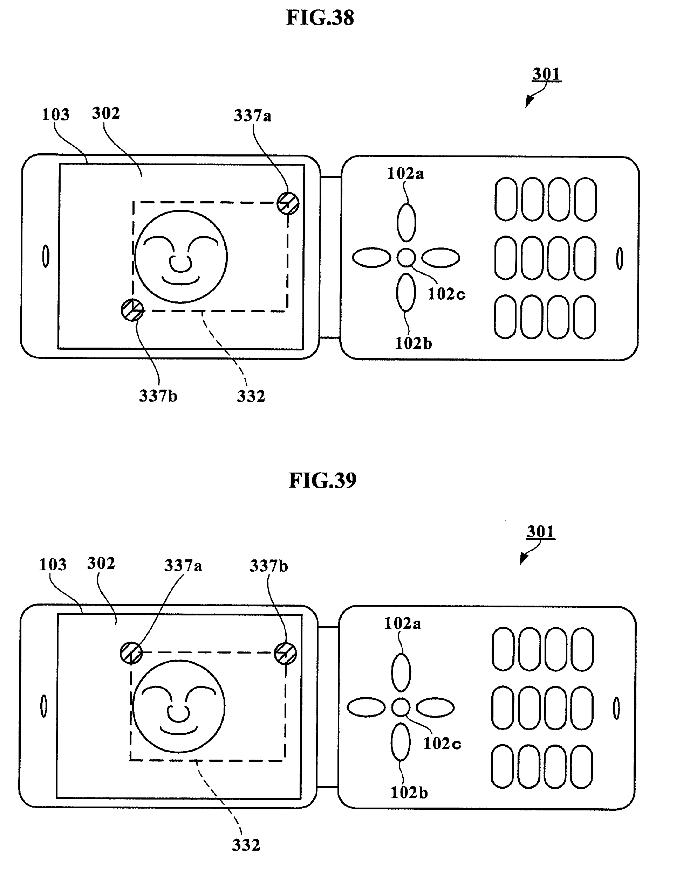

The condition for the contact information may be two points on the display screen. The instructed region information may indicate the zoom region frame 332 that is a rectangle having two points (337a, 337b) indicated by the contact information, on a diagonal line, as shown in FIG. 38. Alternatively, the instructed region information may indicate the zoom region frame 332 having two points (338a, 338b) indicated by the contact information, on one side of the zoom region frame 332, and having a fixed aspect ratio, as shown in FIG. 39. Moreover, the length of the side may be adjusted by finger-sliding on the touch panel 302.

As described above, including the touch panel 302, this embodiment can employ various methods for setting the zoom region frame 332. According to this embodiment, user convenience can be improved.

The core part for carrying out processes for the imaging device comprising the controller 108, the reader 110, and the like can be implemented by using an ordinary computer system without using any dedicated system. For example, the imaging device for carrying out the above-described processes may be configured by distributing a computer program for performing the above-described operations in the form of being stored in a computer-readable recording medium (such as a flexible disk, a CD-ROM, or a DVD-ROM), and installing the computer program in a computer. Alternatively, the imaging device may be configured by storing the computer program in a storage device included in a server device on a communication network such as the Internet, and then downloading the computer program to an ordinary computer system, for example. When the functions of the imaging device are implemented in the form of sharing by the OS (operating system) and application programs or cooperation by the OS and the application programs, only the part for which the application programs are responsible may be stored in a recording medium or a storage device. Alternatively, the computer program that is superimposed on a carrier can be distributed via a communication network. For example, the computer program may be posted on a bulletin board (BBS: Bulletin Boad System) on a communication network and thereby distributed via the network. The imaging device may be configured to be able to carry out the above-described processes by starting the computer program and then executing the computer program under the control of the OS as other application programs.

Note that, although part of or all the above-described embodiments can be described as in the following appendices, the embodiments are not limited to the following.

### (Appendix 1)

An imaging device comprising:
an imaging sensor including *N* pixels (where *N* is an integer equal to or larger than three);
reduction readout means for reading out a piece of sensor information indicating intensity of incident light, from every *M* pixels (where *M* is an integer equal to or larger than two and smaller than *N*) of the *N* pixels of the imaging sensor;
region readout means for reading out, from each of pixels in a specific region among the *N* pixels of the imaging sensor, a piece of sensor information indicating intensity of light incident upon the pixel;
mode selection means for obtaining a zoom factor on the basis of a user instruction, and selecting either a reduction mode or a region mode as a readout mode depending on the obtained zoom factor, the reduction mode being for reading out the piece of sensor information by the reduction readout means, the region mode being for reading out the piece of sensor information by the region readout means;
switching discrimination means for discriminating whether or not the readout mode selected by the mode selection means requires a change of the readout mode;
switching-image generation means for generating switching image information representing a pre-set switching image when the switching discrimination means discriminates that the readout mode is to be changed; and
display control means for
   causing a reduction image to be displayed when the piece of sensor information is read out in the reduction mode, the reduction image being represented by the piece of sensor information read out by the reduction readout means,
   causing a region image to be displayed when the piece of sensor information is read out in the region mode, the region image being represented by the piece of the sensor information read out by the region readout means, and
   causing a switching image to be displayed while changing from one of the reduction image and the region image to the other, the switching image being represented by the switching image information generated by the switching-image generation means.

### (Appendix 2)

The imaging device according to Appendix 1, wherein, when the readout mode is discriminated to be changed by the switching discrimination means, the switching-image generation means generates switching image information representing the pre-set switching image to be displayed until the image represented by the piece of sensor information read out by either the reduction readout means or the region readout means corresponding to the readout mode after the change is displayed by the display control means.

### (Appendix 3)

The imaging device according to Appendix 1 or 2, wherein the switching-image generation means generates the switching image information from the piece of sensor information read out by a corresponding one of the reduction readout means and the region readout means before discrimination is made on the change of the readout mode by the switching discrimination means.

### (Appendix 4)

An imaging device comprising:
an imaging sensor including *N* pixels (where *N* is an integer equal to or larger than three);
region receipt means for receiving information indicating a region specified by a user on an image displayed on display means;
reduction readout means for reading out a piece of sensor information indicating intensity of incident light, from every *M* pixels (where *M* is an integer equal to or larger than two and smaller than *N*) of the *N* pixels of the imaging sensor;
region readout means for reading out, from each of pixels in a specific region among the *N* pixels of the imaging sensor, a piece of sensor information indicating intensity of light incident upon the pixel;
mode selection means for obtaining a zoom factor from size of the image displayed on the display means and size of the region indicated by the information received by the region receipt means, and selecting either a reduction mode or a region mode as a readout mode depending on the obtained zoom factor, the reduction mode being for reading out the piece of sensor information by the reduction readout means, the region mode being for reading out the piece of sensor information by the region readout means;
zoom-image generation means for generating zoom image information corresponding to the obtained zoom factor, from a corresponding one of the piece of sensor information read out by the reduction readout means and the piece of sensor information read out by the region readout means; and
display control means for causing the display means to display a zoom image represented by the zoom image information.

### (Appendix 5)

The imaging device according to Appendix 4, comprising input means including a key or a touch panel, wherein
the region receipt means receives the region specified by a user in the image displayed on the display means, upon operation of the input means by a user.

### (Appendix 6)

The imaging device according to any one of Appendices 1 to 5, wherein the mode selection means selects the reduction mode when the zoom factor is smaller than a threshold value, and selects the region mode when the zoom factor is equal to or larger than the threshold value.

### (Appendix 7)

The imaging device according to any one of Appendices 1 to 6, wherein the zoom factor is obtained by using, as a reference, an image generated on the basis of all the pieces of sensor information read out by the reduction readout means.

### (Appendix 8)

A computer-readable recording medium storing a program causing a computer to function as:
reduction readout means for reading out a piece of sensor information indicating intensity of incident light, from every *M* pixels of *N* pixels of an imaging sensor (where *N* is an integer equal to or larger than three) (where *M* is an integer equal to or larger than two and smaller than *N*);
region readout means for reading out, from each of pixels in a specific region among the *N* pixels of the imaging sensor, a piece of sensor information indicating intensity of light incident upon the pixel;
mode selection means for obtaining a zoom factor on the basis of a user instruction, and selecting either a reduction mode or a region mode as a readout mode depending on the obtained zoom factor, the reduction mode being for reading out the piece of sensor information by the reduction readout means, the region mode being for reading out the piece of sensor information by the region readout means;
switching discrimination means for discriminating whether or not the readout mode selected by the mode selection means requires a change of the readout mode;
switching-image generation means for generating switching image information representing a pre-set switching image when the switching discrimination means discriminates that the readout mode is to be changed; and
display control means for
   causing a reduction image to be displayed when the piece of sensor information is read out in the reduction mode, the reduction image being represented by the piece of sensor information read out by the reduction readout means,
   causing a region image to be displayed when the piece of sensor information is read out in the region mode, the region image being represented by the piece of the sensor information read out by the region readout means, and
   causing a switching image to be displayed while changing from one of the reduction image and the region image to the other, the switching image being represented by the switching image information generated by the switching-image generation means.

### (Appendix 9)

A computer-readable recording medium storing a program causing a computer to function as:
region receipt means for receiving information indicating a region specified by a user on an image displayed on display means;
reduction readout means for reading out a piece of sensor information indicating intensity of incident light, from every *M* pixels of *N* pixels of an imaging sensor (where *N* is an integer equal to or larger than three) (where *M is* an integer equal to or larger than two and smaller than *N*);
region readout means for reading out, from each of pixels in a specific region among the *N* pixels of the imaging sensor, a piece of sensor information indicating intensity of light incident upon the pixel;
mode selection means for obtaining a zoom factor from size of the image displayed on the display means and size of the region indicated by the information received by the region receipt means, and selecting either a reduction mode or a region mode as a readout mode depending on the obtained zoom factor, the reduction mode being for reading out the piece of sensor information by the reduction readout means, the region mode being for reading out the piece of sensor information by the region readout means;
zoom-image generation means for generating zoom image information corresponding to the obtained zoom factor, from a corresponding one of the piece of sensor information read out by the reduction readout means and the piece of sensor information read out by the region readout means; and
display control means for causing the display means to display a zoom image represented by the zoom image information.

The present invention encompasses various embodiments and modifications without departing from the broad spirit and scope of the present invention. Further, the above-described embodiments are intended to describe the present invention and not to limit the scope of the present invention. In other words, the scope of the present invention is defined by the scope of claims and not by the embodiments. In addition, various modifications made within the scope of claims and the scope of the purpose of the invention equivalent to the scope of claims, are considered within the scope of the present invention.

The present invention is based upon Japanese Patent Application No. 2011-149529, filed on July 5, 2011. The entire contents of the description, the scope of claims, and the drawings of Japanese Patent Application No. 2011-149529 are incorporated in the present description by reference.

### Industrial Applicability

The present invention can be used in various fields of imaging devices that change a zoom factor by using a digital zoom function.

### Reference Signs List

- 101, 201, 301: Mobile phone
- 102a - 102c: Inputter
- 103: Display
- 105: Imaging sensor
- 106: Memory
- 108: Controller
- 109, 209, 309: Input receiver
- 110: Reader
- 111, 211: Mode selector
- 112: Mode switching discriminator
- 115: Magnification confirmation receiver
- 116: Magnification change receiver
- 117: Mode setter
- 118: Pixel adder
- 119: Cutouter
- 120: Calculator
- 121: Comparator
- 122: Selector
- 123: Reference image generator
- 124: Zoom image generator
- 125: Switching image generator
- 126, 226: Display controller
- 232, 332: Zoom region frame
- 233, 333: Region generator
- 234: Region change receiver
- 235: Region confirmation receiver
- 302: Touch panel
- 336: Region instruction receiver

## Claims

1. An imaging device comprising:
an imaging sensor including *N* pixels (where *N* is an integer equal to or larger than three);
reduction readout means for reading out a piece of sensor information indicating intensity of incident light, from every *M* pixels (where *M* is an integer equal to or larger than two and smaller than *N*) of the *N* pixels of the imaging sensor;
region readout means for reading out, from each of pixels in a specific region among the *N* pixels of the imaging sensor, a piece of sensor information indicating intensity of light incident upon the pixel;
mode selection means for obtaining a zoom factor on the basis of a user instruction, and selecting either a reduction mode or a region mode as a readout mode depending on the obtained zoom factor, the reduction mode being for reading out the piece of sensor information by the reduction readout means, the region mode being for reading out the piece of sensor information by the region readout means;
switching discrimination means for discriminating whether or not the readout mode selected by the mode selection means requires a change of the readout mode;
switching-image generation means for generating switching image information representing a pre-set switching image when the switching discrimination means discriminates that the readout mode is to be changed; and
display control means for
causing a reduction image to be displayed when the piece of sensor information is read out in the reduction mode, the reduction image being represented by the piece of sensor information read out by the reduction readout means,
causing a region image to be displayed when the piece of sensor information is read out in the region mode, the region image being represented by the piece of the sensor information read out by the region readout means, and
causing a switching image to be displayed while changing from one of the reduction image and the region image to the other, the switching image being represented by the switching image information generated by the switching-image generation means.

2. The imaging device according to Claim 1, wherein, when the readout mode is discriminated to be changed by the switching discrimination means, the switching-image generation means generates switching image information representing the pre-set switching image to be displayed until the image represented by the piece of sensor information read out by either the reduction readout means or the region readout means corresponding to the readout mode after the change is displayed by the display control means.

3. The imaging device according to Claim 1 or 2, wherein the switching-image generation means generates the switching image information from the piece of sensor information read out by a corresponding one of the reduction readout means and the region readout means before discrimination is made on the change of the readout mode by the switching discrimination means.

4. An imaging device comprising:
an imaging sensor including *N* pixels (where *N* is an integer equal to or larger than three);
region receipt means for receiving information indicating a region specified by a user on an image displayed on display means;
reduction readout means for reading out a piece of sensor information indicating intensity of incident light, from every *M* pixels (where *M* is an integer equal to or larger than two and smaller than *N*) of the *N* pixels of the imaging sensor;
region readout means for reading out, from each of pixels in a specific region among the *N* pixels of the imaging sensor, a piece of sensor information indicating intensity of light incident upon the pixel;
mode selection means for obtaining a zoom factor from size of the image displayed on the display means and size of the region indicated by the information received by the region receipt means, and selecting either a reduction mode or a region mode as a readout mode depending on the obtained zoom factor, the reduction mode being for reading out the piece of sensor information by the reduction readout means, the region mode being for reading out the piece of sensor information by the region readout means;
zoom-image generation means for generating zoom image information corresponding to the obtained zoom factor, from a corresponding one of the piece of sensor information read out by the reduction readout means and the piece of sensor information read out by the region readout means; and
display control means for causing the display means to display a zoom image represented by the zoom image information.

5. The imaging device according to Claim 4, comprising input means including a key or a touch panel, wherein
the region receipt means receives the region specified by a user in the image displayed on the display means, upon operation of the input means by a user.

6. The imaging device according to any one of Claims 1 to 5, wherein the mode selection means selects the reduction mode when the zoom factor is smaller than a threshold value, and selects the region mode when the zoom factor is equal to or larger than the threshold value.

7. The imaging device according to any one of Claims 1 to 6, wherein the zoom factor is obtained by using, as a reference, an image generated on the basis of all the pieces of sensor information read out by the reduction readout means.

8. A computer-readable recording medium storing a program causing a computer to function as:
reduction readout means for reading out a piece of sensor information indicating intensity of incident light, from every *M* pixels of *N* pixels of an imaging sensor (where *N* is an integer equal to or larger than three) (where *M is* an integer equal to or larger than two and smaller than *N*);
region readout means for reading out, from each of pixels in a specific region among the *N* pixels of the imaging sensor, a piece of sensor information indicating intensity of light incident upon the pixel;
mode selection means for obtaining a zoom factor on the basis of a user instruction, and selecting either a reduction mode or a region mode as a readout mode depending on the obtained zoom factor, the reduction mode being for reading out the piece of sensor information by the reduction readout means, the region mode being for reading out the piece of sensor information by the region readout means;
switching discrimination means for discriminating whether or not the readout mode selected by the mode selection means requires a change of the readout mode;
switching-image generation means for generating switching image information representing a pre-set switching image when the switching discrimination means discriminates that the readout mode is to be changed; and
display control means for
causing a reduction image to be displayed when the piece of sensor information is read out in the reduction mode, the reduction image being represented by the piece of sensor information read out by the reduction readout means,
causing a region image to be displayed when the piece of sensor information is read out in the region mode, the region image being represented by the piece of the sensor information read out by the region readout means, and
causing a switching image to be displayed while changing from one of the reduction image and the region image to the other, the switching image being represented by the switching image information generated by the switching-image generation means.

9. A computer-readable recording medium storing a program causing a computer to function as:
region receipt means for receiving information indicating a region specified by a user on an image displayed on display means;
reduction readout means for reading out a piece of sensor information indicating intensity of incident light, from every *M* pixels of *N* pixels of an imaging sensor (where *N* is an integer equal to or larger than three) (where *M* is an integer equal to or larger than two and smaller than *N*);
region readout means for reading out, from each of pixels in a specific region among the *N* pixels of the imaging sensor, a piece of sensor information indicating intensity of light incident upon the pixel;
mode selection means for obtaining a zoom factor from size of the image displayed on the display means and size of the region indicated by the information received by the region receipt means, and selecting either a reduction mode or a region mode as a readout mode depending on the obtained zoom factor, the reduction mode being for reading out the piece of sensor information by the reduction readout means, the region mode being for reading out the piece of sensor information by the region readout means;
zoom-image generation means for generating zoom image information corresponding to the obtained zoom factor, from a corresponding one of the piece of sensor information read out by the reduction readout means and the piece of sensor information read out by the region readout means; and
display control means for causing the display means to display a zoom image represented by the zoom image information.
